# EUROPEAN PATENT APPLICATION

(11) **EP 4 443 060 A1**
(43) Date of publication of application: **09.10.2024**
(21) Application number: 21967380.3
(22) Date of filing: 24.12.2021
(51) Int. Cl.: F24C 15/20, F24F 7/00, F24F 110/65

(54) **METHOD FOR CONTROLLING MOBILE HOOD**

(30) Priority: 06.12.2021 KR 20210172635
(71) Applicant: LG Electronics Inc., Yeongdeungpo-gu Seoul 07336 (KR)
(72) Inventor: KIM, Hosan, Seoul 08592 (KR); NAM, Hyeunsik, Seoul 08592 (KR); SHIM, Chanbo, Seoul 08592 (KR)
(74) Representative: Vossius & Partner Patentanwälte Rechtsanwälte mbB
(86) International application number: PCT/KR2021/019864
(87) International publication number: WO 2023/106508

(57) **Abstract**

Disclosed is an invention related to a method for controlling a mobile hood. The disclosed invention is characterized in that a mobile hood is controlled in terms of any one of strength and direction of suction power and strength and direction of air curtain on the basis of measurement of any one from among the pollutant concentration, and distance and height to the cooking object.

## Description

### BACKGROUND

### [Technical Field]

The present invention relates to a method for controlling a mobile hood, and more specifically, to a method for controlling a mobile hood used to suction and remove pollutants floating therein.

### [Background Art]

Generally, kitchens are provided with a kitchen counter on which a heating device such as an electric heater or a gas range is disposed to cook food by applying high-temperature heat to the food, such as boiling or baking.

In this case, the food to be cooked heated by the high heat of the heating device disposed on the kitchen counter generates pollutants such as smoke, odor, and oil vapor in the heating process. The pollutants may be floated by heat and spread throughout the kitchen or room. The diffused pollutants may provide an unpleasant odor to cause disgust. In particular, in a closed kitchen, the pollutants reduce workers' concentration and become a factor of harming the workers' health.

Therefore, a range hood is installed in the kitchen to exhaust the pollutants such as smoke, odor, and oil vapor generated when cooking food to the outside.

Such a range hood may include a hood main body that forms the appearance of the range hood and has an inlet formed on a lower surface thereof, and a blower for suctioning air into the hood main body and generating an airflow for discharging the air to the outside. In addition, the range hood may further include a filter installed on the hood main body to filter the air suctioned into the main body, and a pipe for forming a passage for discharging the air passing through the filter and suctioned into the main body to the outside.

An operation of the range hood configured as described above will be described as follows.

The pollutants generated in the process of heating the food to be cooked on the kitchen counter by the heating device are moved up by their own buoyancy due to a higher temperature than the surrounding air or are forcibly moved up by the airflow generated by a blower of the range hood. The moved-up pollutants may pass through the filter and may be discharged through the pipe connected to an external duct.

Although the range hood may suction some air and pollutants near the inlet formed in the lower surface of the hood main body, it is difficult to properly suction the air and pollutants located far away from the inlet. It is because, as a distance from the inlet increases, a flow rate of the suction airflow decreases in an inverse proportion to the square of the distance from the inlet.

That is, in the conventional range hoods, suction performance is quickly reduced as the distance from the inlet increases, and when a suction flow rate of a suction fan is increased, the collection efficiency of pollutants is not proportionally increased.

Nevertheless, there is a method for increasing the suction power of the range hood by increasing the suction flow rate of the suction fan, but since the consumed power of the suction fan should be increased by 23 times, that is, 8 times to double the suction flow rate of the suction fan, there is a problem that power consumption increases excessively, thereby greatly increasing noise.

Therefore, the effective suction area of the conventional range hood is inevitably limited to a small area having about a diameter of the inlet. Therefore, the conventional range hood is not suitable for removing the pollutants occurring far from the inlet.

A range hood using vortex has been developed to compensate such a disadvantage. The range hood using the vortex may generate a vortex by blowing the amount of air similar to the flow rate of the suction air into a space and can increase collection efficiency using the concentrated vortex generated as described above.

However, according to the range hood, noise is generated due to the generation of turbulence due to mutual interference between the blowing flow and the suction flow in a narrow area under the inlet.

In addition, the vortex generated from the range hood using the vortex generates a flow that blows into the space, and such a flow may cause additional diffusion of the pollutants in the space.

In addition, the range hood has a disadvantage in that the installation of additional equipment, such as a blower, a filter, and a flow pipe, for generating a vortex.

Meanwhile, recently, an exhaust device using a swirler has been introduced. The swirler is rotatably installed at the inlet side of the exhaust device. The swirler includes a disk-shaped rotational plate, a plurality of blades arranged on a lower surface of the rotational plate to form a vortex, and a driving motor for rotating the rotational plate.

The swirler configured as described above serves to expand the suction area of the exhaust device by generating the vortex near the inlet of the exhaust device upon rotating.

The larger the magnitude of the vortex generated by the swirler, the further the suction area of the exhaust device may be expanded. In particular, when a large vortex may be generated at the front side of the exhaust device, the air and pollutants located far away from the exhaust device can be suctioned more effectively.

Patent Document 1 (Korean Patent No. 10-2059802) discloses a range hood provided with a vortex fan. As shown in FIG. 43, the range hood disclosed in Patent Document 1 includes a housing 200, an upper case 300, a vortex fan 400, and a lower filter case 500.

An exhaust fan 210 is installed in the housing 200, and the upper case 300 is coupled to a lower end of the housing 200. The vortex fan 400 is installed inside the upper case 300, and the lower filter case 500 is installed to be spaced apart from a lower portion of the vortex fan 400.

The vortex fan 400 is disposed in a separation space 460 between an upper surface of the lower filter case 500 and a ceiling surface of the upper case 300. When the driving motor 220 operates, the vortex fan 400 rotates together with the exhaust fan 210.

The vortex fan 400 pushes the air in the space 460 to the outside, and the pushed airflow flows down along an inclined surface of the upper case 300 and then is discharged outward from the upper case 300 through an exhaust space 700 between an outer surface of the lower filter case 500 and an inner surface of the upper case 300.

As the airflow discharged outward from the upper case 300 is returned by a suction power of the exhaust fan 210, a vortex is generated in an outer lower portion of the lower filter case 500. That is, a kind of low pressure zone is generated in the outer periphery of the lower filter case 500, and an upward airflow appears in a central portion in which the exhaust fan 210 and the vortex fan 400 are disposed.

The upward airflow is strengthened by the suction power of the exhaust fan 210, and as the exhaust fan 210 rotates together with the vortex fan 400, the donut-shaped low pressure zone performs a circular motion. The generated whirlwind airflow makes it possible to collect gas in a wide area.

The range hood of Patent Document 1 is fixedly installed at any one location in the kitchen, for example, at an upper end of a sink. Such a range hood may slightly suction and discharge only the air near the sink in which the range hood is installed, and when cooking is performed at a location out of the kitchen, it is difficult to suction and discharge the air therearound.

There is a physical limit that, even when the suction power of a general exhaust fan such as an exhaust fan 210 provided in the range hood in Patent Document 1 is away from an inlet of the exhaust fan by only a diameter of the exhaust fan, a flow rate of the suction flow rate at the corresponding location is reduced to 1/10 or less of the suction flow rate at the inlet of the exhaust fan.

Therefore, when cooking is performed at a location away from a place at which the range hood is installed, it is not actually possible to suction and remove pollutants, such as odor or smoke, generated from the cooking area through the range hood.

In addition, the range of the vortex generated by the vortex fan 400 of the range hood in Patent Document 1 is much greater than the range of the range hood. Therefore, when the range hood is installed in a dining table or a kitchen space, an additional space for maintaining the vortex generated by the vortex fan 400 should be secured sufficiently.

That is, the range hood provided with the vortex fan 400 as disclosed in Patent Document 1 has a limit in installation space in that the range hood should be installed at a dining table or in a kitchen space in a state in which a sufficient additional space is secured.

In addition, when the range hood is installed at the dining table or in the kitchen space, there is a possibility that a vortex may be in direct contact with a user who is cooking or eating at the dining table or in the kitchen space. In this case, there may be problems that it becomes difficult to properly maintain the vortex and considerable discomfort may be given to the user.

In addition, the vortex fan 400 of the range hood disclosed in Patent Document 1 may effectively generate a vortex under the condition of being rotated at a specific speed. That is, when rotating at a speed outside an appropriate range, the vortex fan 400 may not properly generate a vortex.

When the rotational speed of the vortex fan 400 is outside the appropriate range, the vortex may not be properly generated, and therefore, there may be a phenomenon in which the suction performance of the range hood is further degraded when the vortex fan 400 is operated than when the vortex fan 400 is not operated.

That is, in Patent Document 1, when the rotation speed of the vortex fan 400 may not be well maintained within the appropriate range, there may be a problem in which the suction performance is rather degraded compared to the range hood without the vortex fan 400.

In addition, in Patent Document 1, two fans are built into one range hood. That is, the exhaust fan 210 and the vortex fan 400 are installed together inside the range hood, and the exhaust fan 210 and the vortex fan 400 are arranged in a row in a vertical direction.

Therefore, the range hood of Patent Document 1 has a considerably great width due to the vortex fan 400 and has a considerably great thickness in the vertical direction due to the two fans arranged in a row in the vertical direction.

The range hood of Patent Document 1 has problems that it is difficult to install the range hood in a narrow kitchen space and it is difficult to use the range hood in a portable manner due to its size and weight.

That is, in the range hood of Patent Document 1, it is difficult to to use the range hood in a state of being disposed on a sink or a dining table due to its size and it is difficult to move the range hood due to its weight, making it actually impossible to use the range hood in a portable manner.

In the range hood of Patent Document 1, the suction flow is generated upward. When the suction flow is generated upward as described above, there is a high possibility that such polluted air will eventually be suctioned into the range hood even when the polluted air leaks from the range hood while being suctioned.

However, when a location at which the range hood is installed and a location at which cooking is performed are far away from each other, for example, when the range hood is fixedly installed on the upper end of the sink and cooking is performed at an island dining table far away from the range hood, the range hood of Patent Document 1 cannot actually suction and filter the polluted air generated in the cooking process performed at the island dining table.

To treat the polluted air generated in the cooking process at the island dining table, etc., a portable type movable range hood rather than the range hood installed at the fixed location is needed.

The portable type range hood may be installed in a state of being placed on a flat bottom surface, such as an island dining table. The portable type range hood may be easily moved to the cooking location to suction the polluted air generated in the cooking process.

However, the portable type range hood is installed in a state of being placed on the bottom surface rather than being installed in a state of hanging from top, making it difficult to generate an upward suction flow.

That is, the portable type range hood is disposed horizontally adjacent to the polluted air source rather than being disposed above the polluted air source, making it difficult to generate the upward suction flow.

When the portable type range hood generates the upward suction flow without interfering with cooking, the size of the portable type range hood may inevitably be very large.

Patent Document 2 (Korean Patent No. 10-1891256) discloses a portable hood. As shown in FIG. 44, the portable hood disclosed in Patent Document 2 includes a body 100, a head 200, and a connector 300.

The body 100 may be placed on a flat surface, such as a dining table or the ground and supports the head 200 and the connector 300. The connector 300 connects the body 100 with the head 200.

In addition, the head 200 may be seated on the body 100 when the portable hood 1 is in a state of being fully folded and may protrude forward more than the body 100 when the portable hood 1 is in a state of being fully unfolded.

The head 200 may suction and purify air at the bottom and then discharge the air upward. The head 200 may include a housing 210, an air guide, a blower, a diffuser 240, a discharge grill 250, and a filter unit.

The housing 210 forms the appearance of the head 200, and an air guide is disposed in the housing 210. The blower is disposed in the air guide.

The diffuser 240 is coupled to an upper end of the air guide and an upper end of the housing 210 to diffuse the air blown by the blower. In addition, the discharge grill 250 is coupled to an upper end of the diffuser 240, and the filter unit is disposed in the housing 210 and coupled to a lower end of the air guide.

A connector accommodation groove 130 is formed in an upper surface of the body 100. When the head 200 is in a state of being folded above the body 100, the connector 300 may be accommodated in the connector accommodation groove 130. When the head 200 is in the state of being folded above the body 100, the connector 300 is accommodated in the connector accommodating groove 130, and thus the connector 300 may be invisible when viewed from the outside of the portable hood 1.

When the blower is operated, the head 200 may suction air at the bottom and discharge the air upward. The head 200 may be moved in a vertical direction and in a front-rear direction in a state of being connected to the connector 300. In addition, the head 200 may be tilted by being rotated vertically, or the head 200 may be rotated horizontally to adjust the location of the head 200.

According to the portable hood 1 of Patent Document 2, the head 200 may move in the vertical and front-rear directions and may be located at the top of the cooking appliance. The portable hood 1 provided with the head 200 may generate an upward suction flow.

In the portable hood 1 of Patent Document 2, a length of the connector 300 is limited to about a length within a diameter of the body 100. Since the diameter of the head 200 is also similar to the diameter of the body 100, the length of the connector 300 may be limited to about a length within the diameters of the body 100 and the head 200.

Therefore, unless the size of the body 100 or the head 200 becomes very large, it is difficult for the head 200 to be located far upward from the cooking appliance due to the limited length of the connector 300.

That is, in order for the portable hood 1 to generate the upward suction flow at the top of the cooking appliance, the head 200 is inevitably located at the top not far from the cooking appliance. As described above, when the head 200 is disposed adjacent to the cooking appliance at the top of the cooking appliance, there is a problem that the portable hood 1 interferes with cooking.

However, when the size of the body 100 is increased to increase the length of the connector 300, the size of the portable hood 1 becomes unnecessarily large. As the size of the portable hood 1 increases as described above, it is difficult to secure the arrangement space for the portable hood 1 and it is also difficult to move the portable hood 1 due to the increase in size and weight of the portable hood.

In addition, since the portable hood 1 of Patent Document 2 discharges the suctioned air back into the inside without discharging the suctioned air to the outside, the air should be purified by performing filtering once.

To this end, a filter unit should include a large number of filters or should be provided with an expensive filter. However, when the expensive filter is applied to the filter unit, there is a problem that the manufacturing cost increases accordingly. In addition, as the number of filters increases, the size of the device increases, and the suction performance is inevitably degraded due to increased flow resistance.

Considering such a point, it is difficult for the filter unit to include a large number of filters or an expensive filter, and thus it can be fully seen that it is difficult for the portable hood 1 of Patent Document 2 to fully purify polluted air by performing filtering once.

In addition, a suction area of the portable hood 1 of Patent Document 2 is inevitably smaller than that of the range hood of Patent Document 1 due to the nature of the portable hood 1, which has a limit in increasing its size. Therefore, the portable hood 1 of Patent Document 2 inevitably faces the difficulty in effectively collecting polluted air generated in the cooking process.

### [Related Art Documents]

### [Patent Documents]

(Patent Document 1) Korean Patent No. 10-2059802
(Patent Document 2) Korean Patent No. 10-1891256

### [Technical Problem]

The present invention is directed to providing a method for controlling a mobile hood, which can effectively collect pollutants generated in a cooking process performed at a location out of an installation place of a typical range hood, such as a kitchen.

In addition, the present invention is also directed to providing a method for controlling a mobile hood, which can increase the collection efficiency of pollutants in response to changes in distance to a cooking object, the concentration of pollutant, etc.

In addition, the present invention is also directed to providing a method for controlling a mobile hood, which can increase the collection efficiency of pollutants in response to changes in installation height of the mobile hood, a height of generation of pollutants, etc.

### [Technical Solution]

A method for controlling a movable hood according to one embodiment of the present invention for achieving the objects adjusts at least any one of an intensity of suction power and action direction of the suction power of the mobile hood, an intensity of an air curtain, and an action direction of the air curtain based on the result of measuring at least any one of a distance to a cooking object, a height of the cooking object, and a concentration of pollutant

In addition, another embodiment of the present invention performs at least any one of distance measurement to the cooking object and concentration measurement of pollutant and adjusts at least any one of a strength of suction power of the mobile hood, a strength of an air curtain, and an action direction of the air curtain based on the result of measurement.

Preferably, operational control is performed on at least any one of a first fan, a second fan, and a louver, and thus the suction power of the movable hood and the intensity of the air curtain may be adjusted, and the action operation of the air curtain may be adjusted in a horizontal direction.

In addition, according to another embodiment of the present invention, at least any one of distance measurement to the cooking object, height measurement of the cooking object, and concentration measurement of pollutant are performed, and at least any one of a strength of suction power and action direction of the suction power of the mobile hood, a strength of an air curtain, and an action direction of the air curtain is adjusted based on the result of measurement.

Preferably, operational control of at least any one of a fan and a driver may be performed, and thus the suction power of the mobile hood and the intensity of the air curtain may be adjusted, and the suction power of the mobile hood and the action direction of the air curtain may be adjusted in a vertical direction.

In addition, according to another embodiment of the present invention, the mobile hood includes a first fan configured to suction outside air in a first direction and discharge the outside air in the first direction or a second direction orthogonal to the first direction, and a second fan configured to suction air outside the first fan and discharge the air in a direction between a third direction orthogonal to the second direction and the first direction.

With this configuration, according to the present invention, by forming the air curtain near a suction flow, it is possible to increase suction efficiency for polluted air generated from a cooking object.

In addition, according to another embodiment of the present invention, the mobile hood includes a first fan configured to suction outside air in a first direction and discharge the outside air in the first direction or a second direction orthogonal to the first direction, and a second fan configured to suction air outside the first fan and discharge the air in a direction between a third direction orthogonal to the second direction and the first direction.

In addition, according to another embodiment of the present invention, the mobile hood includes a first fan forming a suction flow at a front side, and a second fan disposed at both sides of the first fan to discharge air forward from the both sides of the first fan, wherein the second fan generates a discharge flow that moves in a direction away from the suction flow forward.

With this configuration, according to the present invention, by forming the air curtain near a suction flow, it is possible to increase suction efficiency for polluted air generated from a cooking object.

In addition, according to another embodiment of the present invention, the mobile hood includes a first fan configured to suction outside air and discharge the suctioned air in a direction differing from a suction direction, and a second fan configured to filter the air introduced by the first fan, wherein an inlet configured to form a passage for discharging the air discharged from the first fan to the outside is disposed outside an area in which the outside air is suctioned.

The mobile hood according to the present invention can purify the polluted air generated during cooking while changing the location as needed without being fixedly installed at any location.

In addition, according to another embodiment of the present invention, the mobile hood includes a first fan configured to suction outside air in a front-rear direction or a lateral direction, a filter configured to filter the air suctioned by the first fan, and a second fan configured to suction some of the air passing through the filter and discharge at least some of the suctioned air to an area in which the suction is performed by the first fan.

In addition, according to another embodiment of the present invention, the mobile hood includes a first fan configured to suction outside air in a front-rear direction or a lateral direction, a filter configured to filter the air suctioned by the first fan, and a second fan configured to suction some of the air passing through the filter and discharge at least some of the suctioned air to the outside, wherein the air is discharged by the second fan so that at least some of the air discharged from the second fan is jointed to a suction flow generated by the first fan.

In addition, according to another embodiment of the present invention, the mobile hood includes a first fan configured to suction outside air from a front side, a filter configured to filter the air suctioned by the first fan, and a second fan configured to suction the air passing through the filter and discharge the air in a direction between the front and a centrifugal direction.

Therefore, the re-suction of the air discharged after being already filtered may be guided by the air curtain formed at both left and right sides of the mobile hood.

The mobile hood according to the present invention having such a configuration can more effectively purify polluted air generated in a cooking process by performing a repetitive purification operation for the polluted air.

In addition, according to another embodiment of the present invention, the mobile hood includes a first fan configured to suction outside air from a front side and discharge the outside air in a centrifugal direction, and a second fan configured to suction the air outside the first fan in a radial direction and discharge the air in a direction between a front and the centrifugal direction.

In addition, according to another embodiment of the present invention, the mobile hood includes a first fan configured to suction outside air from a front side and discharge the outside air upward, and a second fan configured to suction the air outside the first fan in a lateral direction and discharge the air in a direction between a front and a side.

According to another embodiment of the present invention, the mobile hood includes a main body provided with an inlet, an outlet, and a discharge port, a first fan configured to suction air through the outlet and discharge the air to the outside of the main body through the outlet, and a second fan configured to discharge at least some of the air flowing into the main body to the outside of the main body through the discharge port.

According to another embodiment of the present invention, the mobile hood includes a main body provided with an outlet and a discharge port, a second fan configured to discharge at least some of the air flowing into the main body to the outside of the main body through a discharge port, and a louver configured to open and close the discharge port.

In addition, according to another embodiment of the present invention, the mobile hood includes a main body provided with an outlet and a discharge port, a second fan configured to discharge at least some of the air flowing into the main body to the outside of the main body through a discharge port, and a louver configured to guide the flow of the air discharged through the discharge port outside the main body.

In addition, according to another embodiment of the present invention, the mobile hood includes a first fan configured to suction outside air in a lateral direction and discharge the outside air in a centrifugal direction, and a second fan disposed outside the first fan in a radial direction to discharge the air in a direction between a front and the centrifugal direction.

In addition, according to another embodiment of the present invention, the mobile hood includes a first fan configured to suction outside air in a front-rear direction and discharge the outside air upward, and a second fan disposed on a side portion of the first fan to discharge the air in a direction between a front and a side.

Therefore, the first fan and the second fan are not arranged in a line in a direction in which a suction flow is generated, and the second fan may be disposed on a side portion of the first fan out of a suction direction and discharge direction of the first fan.

The mobile hood according to the present invention may be provided in a form that has a small thickness sufficiently installed even in a narrow cooking space.

The mobile hood includes a fan configured to suction outside air through an inlet and discharge at least some of the suctioned air, and a flow guide part configured to guide the movement of the air discharged from the fan toward a discharge port, wherein the inlet and the discharge port are disposed in front of the fan, and the discharge port is disposed outside the inlet.

In addition, according to another embodiment of the present invention, the mobile hood includes a fan configured to suction outside air through an inlet and discharge at least some of the suctioned air through a discharge port, and a flow guide part configured to guide the movement of the air discharged from the fan toward the discharge port, wherein the inlet and the discharge port are disposed at a location biased to one side in a first direction more than the fan, and the discharge port is disposed outside the inlet with respect to a radial direction orthogonal to the first direction.

With this configuration, according to the present invention, by forming the air curtain near a suction flow, it is possible to increase suction efficiency for polluted air generated from a cooking object.

According to another embodiment of the present invention, the mobile hood includes a fan configured to suction outside air of a front side at a rear side and discharge the outside air in a centrifugal direction, a flow guide part configured to guide the movement of the air discharged from the fan forward, and a discharge port configured to form a passage for discharging the air moving through the flow guide part forward.

According to another embodiment of the present invention, the mobile hood includes a fan configured to suction outside air through an inlet and discharge at least some of the suctioned air through a discharge port, and a flow guide part configured to guide the movement of the air discharged from the fan toward the discharge port, wherein the inlet and the discharge port are disposed in a centrifugal direction.

In addition, according to another embodiment of the present invention, the mobile hood includes a fan configured to suction outside air and discharge the suctioned air in a direction differing from a suction direction, and a filter configured to filter the air introduced by the fan, wherein a discharge port configured to form a passage for discharging the air discharged from the fan to the outside is disposed outside an area in which the outside air is suctioned.

The mobile hood according to the present invention can purify the polluted air generated during cooking while changing the location as needed without being fixedly installed at any location.

In addition, according to another embodiment of the present invention, the mobile hood includes a fan configured to generate a suction flow suctioning outside air from a front side, a filter configured to filter the air suctioned by the fan, and a flow guide part configured to guide an airflow so that the air passing through the filter is discharged forward from the outside of the suction flow.

Therefore, the re-suction of the air discharged after being already filtered may be guided by the air curtain formed at both left and right sides of the mobile hood.

The mobile hood according to the present invention having such a configuration can more effectively purify polluted air generated in a cooking process by performing a repetitive purification operation for the polluted air.

In addition, according to another embodiment of the present invention, the mobile hood includes a fan configured to suction outside air through an inlet disposed at a front side and discharge at least some of the suctioned air through a discharge port disposed at the front side.

In addition, according to another embodiment of the present invention, the inlet and the outlet are disposed in a centrifugal shape at the front side of the fan, and the suction of the outside air through the inlet and the discharge of the air through the discharge port are performed by one fan.

A method for controlling a mobile hood according to one aspect of the present invention may include a measuring operation of performing at least any one of distance measurement to a cooking object and concentration measurement of pollutant, and an operational control operation of controlling an operation of at least any one of the first fan, the second fan, and the louver based on the result of measurement in the measuring operation.

In addition, it is preferable that the measuring operation includes measuring the distance to the cooking object, and the operational control operation includes setting a location of the louver based on the result of measurement in the measuring operation.

In addition, it is preferable that the first fan suctions the outside air in a first direction and discharges the suctioned air in a second direction orthogonal to the first direction through the outlet.

In addition, it is preferable that a pair of the second fans are disposed in a third direction with the first fan interposed therebetween, and the pair of the second fans discharge the outside air suctioned in the first direction in a direction between the first direction and the third direction through the discharge port.

In addition, it is preferable that the louver forms a surface parallel to the third direction at the unfolded location and forms a surface parallel to the first direction at the closed location.

In addition, it is preferable that the operational control operation includes setting a location of the louver to a location closer to the closed location than the unfolded location when a distance measured in the measuring operation is greater than or equal to a reference distance, and setting the location of the louver to a location closer to the unfolded location than the closed location when the distance measured in the measuring operation is smaller than the reference distance.

In addition, it is preferable that the operational control operation includes setting a rotational speed of at least any one of the first fan and the second fan based on the result of measurement in the measuring operation.

In addition, it is preferable that the operational control operation includes setting the rotational speed of the second fan based on the result of measurement in the measuring operation.

In addition, it is preferable that the measuring operation includes a distance measurement operation of measuring the distance to the cooking object, and a pollutant measuring operation of measuring the concentration of the pollutant.

In addition, it is preferable that the operational control operation includes setting the rotational speed of the first fan based on the result of measurement in the pollutant measuring operation, and setting the rotational speed of the second fan based on the result of measurement in the distance measuring operation.

In addition, a method for controlling a mobile hood according to another aspect of the present invention may include a measuring operation of performing at least any one of distance measurement to a cooking object, height measurement of the cooking object, and concentration measurement of pollutant, and an operational control operation of controlling an operation of at least any one of the first fan and the driver based on the result of measurement in the measuring operation.

In addition, the measuring operation may includes measuring the height of the cooking object, and the operational control operation may control an operation of the driver to take the derived attitude of the case based on the result of measurement in the measuring operation.

In addition, the measuring operation may include at least any one of the distance measuring operation of measuring the distance to the cooking object and the pollutant measuring operation of measuring the concentration of the pollutant.

In addition, it is preferable that the operational control operation includes setting the rotational speed of the fan based on the result of measurement in the distance measuring operation or the pollutant measuring operation.

In addition, the measuring operation may include a distance measuring operation of measuring the distance to the cooking object, and a height measuring operation of measuring the height of the cooking object.

In addition, according to the present invention, the method may further include an attitude deriving operation of deriving an attitude of the case based on the result of measurement in the distance measuring operation and the result of measurement in the height measuring operation, wherein the operational control operation may include controlling the operation of the driver to take the attitude of the case derived in the attitude deriving operation.

In addition, the measuring operation may include measuring the distance to the cooking object, and the operational control operation may include setting the rotational speed of the fan based on the result of measurement in the measuring operation.

In addition, the mobile hood may further include a display part configured to display a state of the mobile hood.

In addition, it is preferable that the operational control operation includes controlling an operation of the display part to display the result of measurement in the measuring operation on the display part.

### [Advantageous Effects]

According to the method for controlling the mobile hood according to the present invention, by measuring the distance to the cooking object and the concentration of pollutants and controlling the operation of the mobile hood based on the result of measurement, it is possible to very effectively purify the polluted air generated in the cooking process.

In addition, according to the present invention, by controlling the operation of the mobile hood based on the result of measuring the concentration of pollutants to implement the n^{th} filtering effect in which the air to be purified is filtered multiple times by the filter, it is possible to provide the more improved air purification effect, thereby more effectively improving the air quality of the air curtain.

In addition, according to the present invention, by automatically adjusting the strength of the suction power and the angle and intensity of the air curtain according to the distance to the cooking object and the concentration of pollutants, it is possible to improve the user's convenience and at the same time, effectively increase the collection efficiency of the pollutants.

In addition, according to the present invention, by automatically adjusting the mobile hood to the attitude suitable for the installation height of the mobile hood or the height of generation of pollutants to suction the pollutants, it is possible to improve the user's convenience and at the same time, effectively increase the collection efficiency of the pollutants.

In addition, according to the present invention, by allowing the mobile hood to purify the polluted air generated during cooking while changing its location as needed rather than being fixedly installed at any one location, it is possible to effectively purify both the polluted air generated at the installation place of the typical range hood and the polluted air generated in the cooking process performed at the location out of the installation place of the typical range hood.

Since the portable hood according to the present invention may be used by being moved to the location desired by the user, such as a kitchen, a dining table, a room, a lounge, a living room, or an outdoor, the portable hood can be highly used.

In addition, according to the present invention, by forming the air curtain near the suction flow to increase the suction efficiency for the polluted air generated from the cooking object, it is possible to provide the more improved suction performance and pollutant removal performance.

In addition, according to the present invention, by improving the suction efficiency for the polluted air using the air curtain, it is possible to increase very effectively the collection efficiency for the pollutants without increasing the suction flow rate of the fan and effectively increase the collection efficiency for the pollutants without greatly increasing power consumption.

In addition, according to the present invention, by allowing the air curtain formed by the operation of the second fan module to serve as the structure such as a blocking film or an awning, it is possible to provide the mobile hood having the more improved suction performance without any hassle of installing an additional structure.

In addition, according to the present invention, by allowing the air curtain formed by the operation of the second fan module to serve as the structure such as a blocking film or an awning, it is possible to improve the suction performance without interfering with the user's cooking activity.

In addition, according to the present invention, it is possible to stably maintain the combustion of the heating device and effectively remove the pollutants generated by the corresponding heating device.

### [Description of Drawings]

FIG. 1 is a perspective view showing a mobile hood according to one embodiment of the present invention.
FIG. 2 is an exploded perspective view showing a disassembled state of the mobile hood shown in FIG. 1.
FIG. 3 is a perspective view showing a state in which a suction grill and a filter are excluded from the mobile hood shown in FIG. 1.
FIG. 4 is a cross-sectional view along line "IV-IV'" in FIG. 1.
FIG. 5 is a cross-sectional view along line "V-V'" in FIG. 1.
FIG. 6 is a perspective view showing a state in which a louver is opened in the mobile hood shown in FIG. 1.
FIG. 7 is a cross-sectional view showing a state in which the louver is opened in the mobile hood shown in FIG. 4.
FIG. 8 is a cross-sectional view showing a state in which the louver is opened in the mobile hood shown in FIG. 5.
FIG. 9 is an enlarged view of portion "IX" in FIG. 8.
FIG. 10 is a view showing another example of the mobile hood shown in FIG. 9.
FIG. 11 is a view showing a state before the mobile hood according to one embodiment of the present invention is operated.
FIG. 12 is a view showing an operating state of only a first fan of the mobile hood shown in FIG. 11.
FIG. 13 is a side view showing an airflow near the mobile hood in the operating state of the mobile hood shown in FIG. 12.
FIG. 14 is a top view showing an airflow near the mobile hood in the operating state of the mobile hood shown in FIG. 12.
FIG. 15 is a view showing a simultaneous operating state of the first fan and a second fan of the mobile hood shown in FIG. 12.
FIG. 16 is a view showing an airflow near the mobile hood in the operating state of the mobile hood shown in FIG. 15 from the side.
FIG. 17 is a top view showing an airflow near the mobile hood in the operating state of the mobile hood shown in FIG. 15.
FIG. 18 is a configuration diagram schematically showing a configuration of the mobile hood according to one embodiment of the present invention.
FIG. 19 is a flowchart schematically showing a method for controlling the mobile hood according to one embodiment of the present invention.
FIG. 20 is a flowchart specifically showing a process of controlling the mobile hood according to one embodiment of the present invention.
FIG. 21 is a view showing an airflow near the mobile hood under the condition in which the louver is set to an angle smaller than a first angle when a distance between the mobile hood and a cooking object are a short distance.
FIG. 22 is a top view showing an airflow near the mobile hood shown in FIG. 21.
FIG. 23 is a view showing an airflow near the mobile hood under the condition in which the louver is set to the first angle when the distance between the mobile hood and the cooking object are a short distance.
FIG. 24 is a top view showing an airflow near the mobile hood shown in FIG. 23.
FIG. 25 is a view showing an airflow near the mobile hood under the condition in which the louver is set to the first angle when the distance between the mobile hood and a cooking object are a long distance.
FIG. 26 is a top view showing an airflow near the mobile hood shown in FIG. 25.
FIG. 27 is a perspective view showing a mobile hood according to another embodiment of the present invention.
FIG. 28 is an exploded perspective view showing a disassembled state of the mobile hood shown in FIG. 1.
FIG. 29 is a cross-sectional view along line "XXIX-XXIX" in FIG. 27.
FIG. 30 is a perspective view separately showing a case and a shroud according to another embodiment of the present invention.
FIG. 31 is a perspective view separately showing an orifice shell according to another embodiment of the present invention.

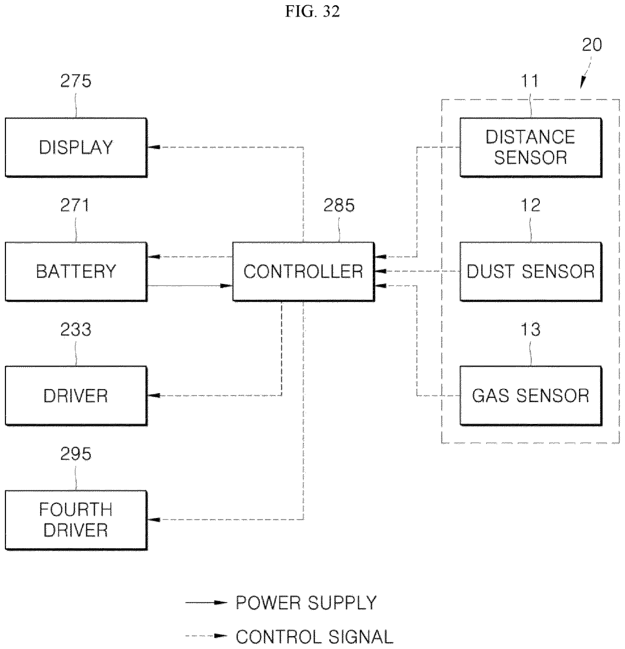

FIG. 32 is a perspective view separately showing the orifice shell, a filter, and a fixing cover according to another embodiment of the present invention.
FIG. 33 is a configuration diagram schematically showing a portion of the configuration of the mobile hood according to another embodiment of the present invention.
FIG. 34 is a side cross-sectional view showing an airflow inside the mobile hood shown in FIG. 29.
FIG. 35 is a side cross-sectional view showing the trend of a rate of the airflow near a range hood without air curtain function.
FIG. 36 is a side cross-sectional view showing the trend of a rate of the airflow near the mobile hood in an operating state of the mobile hood shown in FIG. 29.
FIG. 37 is a side cross-sectional view showing an air volume state near the mobile hood in the operating state of the mobile hood shown in FIG. 29.
FIG. 38 is a flowchart schematically showing a method for controlling the mobile hood according to another embodiment of the present invention.
FIG. 39 is a flowchart specifically showing a process of controlling the mobile hood according to another embodiment of the present invention.
FIGS. 40 to 42 are side cross-sectional views showing an attitude change state of the mobile hood according to another embodiment of the present invention.

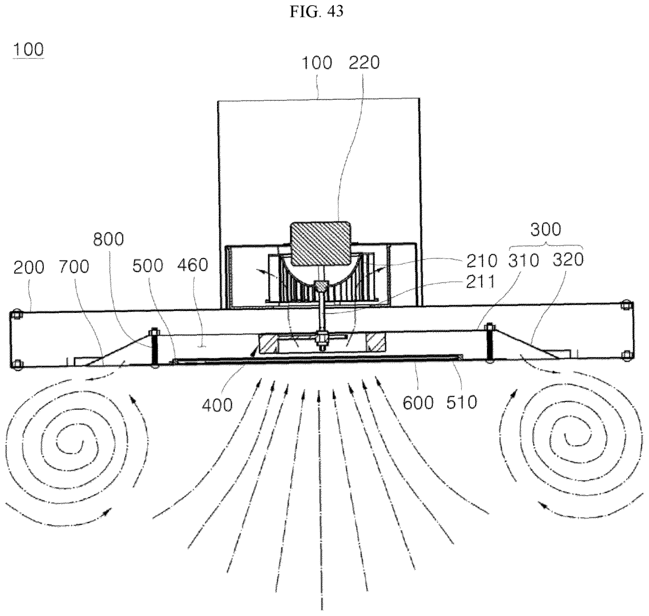

FIG. 43 is a cross-sectional view of a range hood having a vortex fan according to the related art.

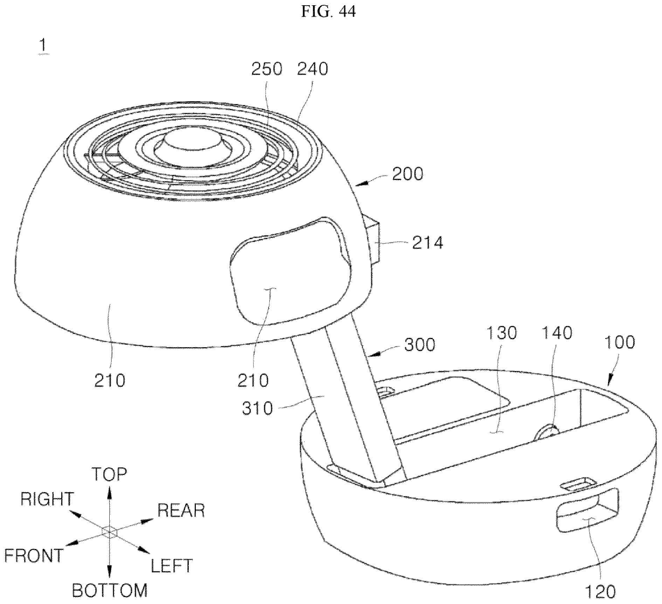

FIG. 44 is a perspective view of a state in which a portable hood according to the related art is fully unfolded.

### [Modes of the Invention]

The above-described objects, features, and advantages will be described below in detail with reference to the accompanying drawings, and thus those skilled in the art to which the present invention pertains will be able to easily carry out the technical spirit of the present invention. In describing the present invention, when it is determined that a detailed description of the known technology related to the present invention may unnecessarily obscure the gist of the present invention, a detailed description thereof will be omitted. Hereinafter, exemplary embodiments according to the present invention will be described in detail with reference to the accompanying drawings. In the drawings, the same reference numerals are used to denote the same or similar components.

Although terms such as first and second are used to describe various components, it goes without saying that the components are not limited by these terms. These terms are only used to distinguish one component from another component, and unless otherwise stated, it goes without saying that the first component may be the second component.

The present invention is not limited to the embodiments disclosed below, but may be variously changed and implemented in various different forms. The present embodiment is merely provided to allow the disclosure of the present invention to be complete and fully inform those skilled in the art of the scope of the invention. Therefore, it should be understood that the present invention is not limited to the embodiments disclosed below, but includes not only the substitutions and additions between a configuration of any one embodiment and a configuration of another embodiment, but also all changes, equivalents, and substitutions included in the technical spirit and scope of the present invention.

The accompanying drawings are only for easy understanding of the embodiments disclosed in the specification, and it should be understood that the technical spirit disclosed in the specification is not limited by the accompanying drawings, and all changes, equivalents, or substitutes included in the spirit and technical scope of the present invention are included in the accompanying drawings. In the drawings, components may be expressed exaggeratedly great or small in size or thickness in consideration of better understanding, etc., but the scope of the present invention should not be construed limitedly.

The terms used in the present specification are only used to describe specific implementations or embodiments and are not intended to limit the present invention. The singular expression includes the plural expression unless the context clearly dictates otherwise. In the specification, terms "-include," "-consist of," etc. are intended to specify the presence of features, numbers, steps, operations, components, parts, or combinations thereof described in the specification. That is, it should be understood that terms "-include," "-consist of," etc. in the specification do not preclude the possibility of the presence or addition of one or more other features, numbers, steps, operations, components, parts or combinations thereof in advance.

Terms including ordinal numbers such as first or second may be used to describe various components, but the components are not limited by the terms. The terms are used only for the purpose of distinguishing one component from another.

When a first component is described as being "connected" or "coupled" to a second component, it should be understood that the first component may be directly connected or coupled to the second component or a third component may be present therebetween. On the other hand, when the first component is described as being "directly connected" or "directly coupled" to the second component, it should be understood that the third component is not present therebetween.

When a certain component is described as being "above" or "under" another component, it should be understood that the certain component may be disposed directly above another component and other components may also be present therebetween.

Unless defined otherwise, all terms used herein, including technical or scientific terms, have the same meaning as commonly understood by those of ordinary skill in the art to which the present invention pertains. Terms such as those defined in a commonly used dictionary should be construed as having a meaning consistent with the meaning in the context of the related art and should not be construed in an ideal or excessively formal meaning unless explicitly defined in the application.

In a state in which a mobile hood is placed on the floor, a direction in which a grill is installed with respect to the center of the mobile hood is defined as a front side Therefore, a direction in which outside air enters the mobile hood through the grill becomes a rear side. For convenience, a direction facing the front and rear sides can be referred to as a first direction. Then, the front side may be one side in the first direction, and the rear side may be the other side in the first direction.

In addition, a direction of gravity can be defined as downward, and a direction opposite to the direction of gravity can be defined as upward.

In addition, a horizontal direction perpendicular to a front-rear direction of the mobile hood, that is, a width direction of the mobile hood when viewing the mobile hood from the front of a grill of the mobile hood can be referred to as a left-right direction. For convenience, the left-right direction can be referred to as a second direction. Then, a right side can be referred to as one side in the second direction, and a left side can be referred to as the other side in the second direction.

In addition, the width direction of the mobile hood may be referred to as a lateral direction. Then, the right side can be referred to as one side in the lateral direction, and the left side can be referred to as the other side in the lateral direction.

In addition, the above-described vertical direction can be referred to as a third direction. Then, an upper side can be referred to as one side in the third direction, and a lower side can be referred to as the other side in the third direction.

In addition, the above-described vertical direction can be referred to as a vertical direction. Then, the front-to-rear direction and the left-right direction, that is, the first direction and the second direction can be referred to as a horizontal direction.

Throughout the specification, when "A and/or B" is described, it means A, B, or A and B unless otherwise stated, and when "C to D" is described, it means C or more and D or less unless otherwise stated.

### <First embodiment of the mobile hood>

### [Overall structure of the mobile hood]

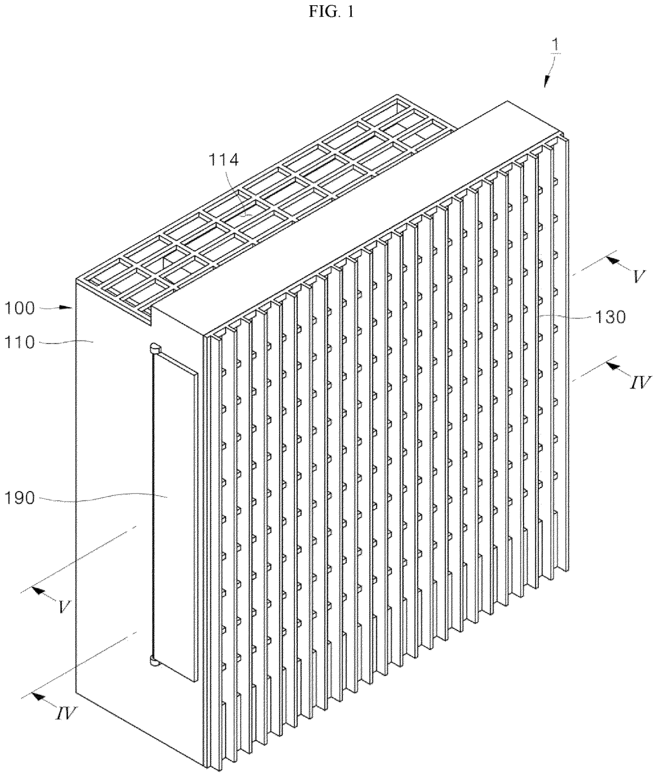

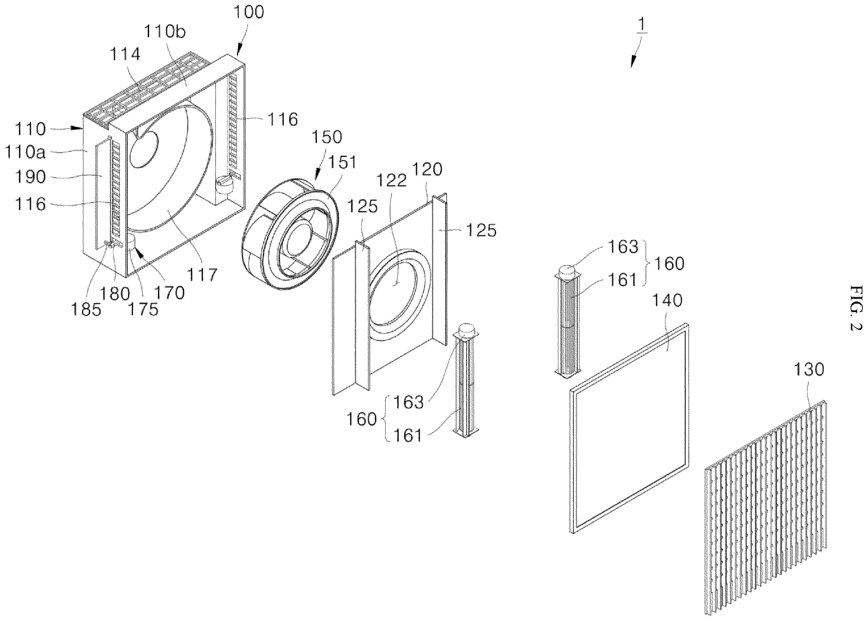

FIG. 1 is a perspective view showing a mobile hood according to one embodiment of the present invention, and FIG. 2 is an exploded perspective view showing the mobile hood shown in FIG. 1

Referring to FIGS. 1 and 2, the mobile hood 1 according to one embodiment of the present invention is not fixed to a specific location and may be installed at a location at which polluted air needs to be purified. That is, a location of the mobile hood 1 according to the present embodiment may be freely changed as needed. The mobile hood 1 may include a main body 100, a first fan module 150, and a second fan module 160.

The main body 100 may form the appearance of the mobile hood 1 according to the present embodiment, and an accommodation space may be formed inside the main body 100. In the present embodiment, the main body 100 is shown as being formed in a substantially hexahedral shape. The main body 100 may accommodate components constituting the mobile hood 1, such as the first fan module 150 and the second fan module 160, therein.

The main body 100 may include a case 110 and a cover 120.

The case 110 is a component occupying most of the main body 100 and may be formed in a hexahedral shape having an open one side in the first direction. An accommodation space may be formed inside the case 110, and the first fan module 150, the second fan module 160, etc. may be accommodated therein.

In addition, the case 110 may form the appearance of the mobile hood 1 and may be provided to be seated on the ground, an upper plate of a sink, a floor of a dining table, etc.

The mobile hood 1 according to the present embodiment provided with the case 110 may be provided in a form that may be easily moved to a place in which cooking is performed, such as a sink, a dining table, or an island dining table, without being fixedly installed at any one location.

Hereinafter, for convenience, one side in the first direction will be referred to as the front side, the other side in the first direction will be referred to as the rear side, one side in the second direction will be referred to as the upper side, the other side in the second direction will be referred to as the lower side, and one side and the other side in the third direction will be referred to as the right side and the left side, respectively.

The cover 120 is provided to cover the case 110 at one side in the first direction, that is, the front side. As an example, the cover 120 may be provided in a shape corresponding to the open front shape of the case 110, for example, in a form of a quadrangular plate.

The main body 100 may be provided with an inlet 122 and an outlet 114. The inlet 122 may form a passage for allowing outside air to flow into a first fan 151 in the main body 100. In addition, the outlet 114 may form a passage for allowing air suctioned into the first fan 151 to be discharged to the outside of the main body 100 in the main body 100.

The inlet 122 may form a passage that opens the inside of the main body 100 in the first direction, that is, the front-back direction. In addition, the outlet 114 may form a passage for opening the inside of the main body 100 in the second direction, that is, the vertical direction.

The inlet 122 may be provided in the cover 120. The inlet 122 may be formed to pass through the cover 120 in the front-rear direction. In addition, the outlet 114 may be provided in the case 110. The outlet 114 may be formed to pass through the case 110 in the vertical direction.

The first fan module 150 may be accommodated inside the main body 100, that is, in the accommodation space. The first fan module 150 may suction outside air in the front-rear 1 direction and discharge the outside air in the front-rear direction or the vertical direction. In the present embodiment, the first fan module 150 is shown as suctioning the outside air from the front side to the rear side and discharging the outside air upward.

The first fan module 150 may suction polluted air to the rear side and then discharge the purified air inside the mobile hood 1 upward.

The second fan module 160 is provided to suction air from the outside of the first fan module 150 and discharge the air in a direction between the third direction and the first direction, that is, in a direction between the left-right direction and the front-rear direction.

In the present embodiment, the second fan module 160 is shown as being disposed at each of the right and left sides of the first fan module 150. In addition, in the present embodiment, it is shown that the second fan module 160 at the right side discharges air in the direction between the right side and the front side, and the second fan module 160 at the left discharges the air in the direction between the left side and the front side.

That is, each second fan module 160 may suction air from the inside or outside of the mobile hood 1 and then discharge the air in a direction between the lateral outer side and front side of the mobile hood 1.

As described above, the flow of the air discharged by the second fan module 160 may serve as an air curtain formed at the lateral outer side of the suction flow generated at the front side of the mobile hood 1 by the first fan module 150. Detailed description thereof will be made below.

Meanwhile, the mobile hood 1 according to the present embodiment may further include a grill 130. The grill 130 may cover the main body 100 at the front side and may be coupled to the main body 100. The grill 130 may be disposed at the frontmost side of the mobile hood 1 to form the front appearance of the mobile hood 1.

The grill 130 may cover an open front surface of the case 110 and may be coupled to the case 110. The grill 130 can block foreign substance from flowing into the components accommodated inside the case 110, for example, the first fan module 150 and the second fan module 160, and protect the components from an external impact.

A plurality of through holes may be formed in the grill 130 to pass therethrough in the front-rear direction. The grill 130 including the through holes may serve to provide a passage for allowing outside air to flow into the main body 100 and cover the front surface of the main body 100 to prevent the inside of the main body 100 from being exposed to the outside.

In addition, the mobile hood 1 according to the present embodiment may further include a filter 140. The filter 140 may be disposed between the first fan 151 and the grill 130, that is, at the rear side of the grill 130. The filter 140 may serve to filter the outside air sucked into the first fan 151 and the second fan 161.

The filter 140 may be formed in a shape corresponding to the front shape of the main body 100 or the shape of the grill 130. In the present embodiment, the filter 140 is shown as being formed in a quadrangular shape corresponding to the front shape of the main body 100.

The filter 140 may be provided in a form including at least any one of a pre-filter, an oil-mist filter/grease filter, an odor filter, a dust filter, a deodorizing filter, and a sterilizing filter.

The pre-filter may be used to catch large dust and oil particles, and the oil mist filter may be used to remove oil vapor generated during cooking. In addition, the deodorizing filter may be formed of activated carbon, etc., which removes odors, and the dust filter is a filter used to remove fine dust.

The filter 140 may be any one of the filters or formed in combination of the filters.

### [Structure of the main body]

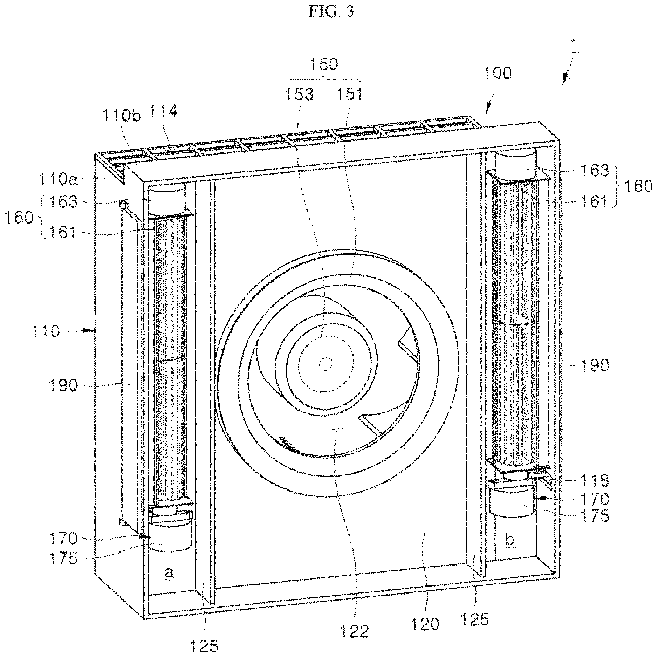

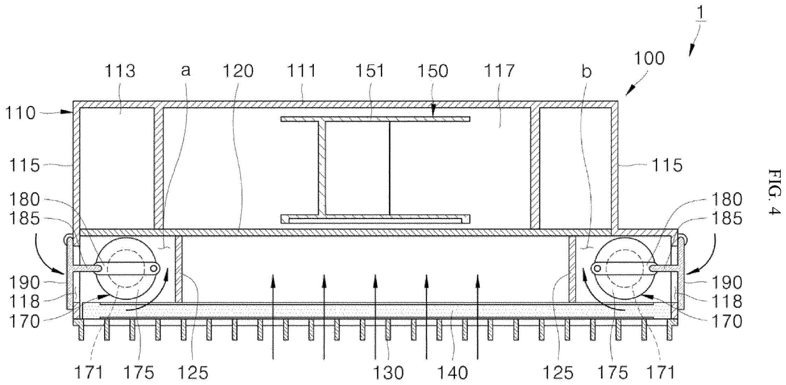

FIG. 3 is a perspective view showing a state in which a suction grill and a filter are excluded from the mobile hood shown in FIG. 1, and FIG. 4 is a cross-sectional view along line "IV-IV'" in FIG. 1.

Referring to FIGS. 1 to 4, the case 110 may be formed in a substantially hexahedral shape, the accommodation space is formed inside the case 110, and the front surface of the case 110 is open. The case 110 may be formed in a hexahedral shape including a first surface 111, a pair of second surfaces 113, and a pair of third surfaces 115.

The first surface 111 may be provided in a form that forms a surface perpendicular to an axis in the front-rear direction. The first surface 111 may form a back surface of the case 110.

The pair of second surfaces 113 may be disposed to face each other vertically with the first surface 111 interposed therebetween. Each second surface 113 may be provided in a form that forms a surface perpendicular to an axis in the vertical direction. The second surface 113 may form top and bottom surfaces of the case 110.

The pair of third surfaces 115 may be disposed to face each other in the left-right directions with the first surface 111 and the second surface 113 interposed therebetween. Each third surface 115 may be provided in a form that forms a surface perpendicular to an axis in the left-right direction. The third surface 115 may form both side surfaces of the case 110.

The case 110 including the first surface 111, the second surface 113, and the third surface 115 may be formed in a form of a box of a substantially hexahedron shape in which the accommodation space is formed therein and a front surface is open.

The outlet 114 may be provided on any one of the pair of second surfaces 113. The outlet 114 may be formed to pass through the second surface 113 in the second direction, that is, the vertical direction.

In the present embodiment, it is shown that the outlet 114 is provided on the second surface 113 disposed at the top of the pair of second surfaces 113. The outlet 114 may be formed to vertically pass through the second surface 113 forming an upper surface of the case 110.

The main body 100 may further include a scroll 117. The scroll 117 may be disposed between the first surface 111 disposed at the rear side of the first fan module 150 and the cover 120 disposed at the front side of the first fan module 150. A space in which a first fan 151 to be described below is accommodated may be formed inside the scroll 117. In addition, an inner circumferential surface of the scroll 117 may be formed as a curved surface surrounding the first fan 151.

The cover 120 may be provided in a form of a quadrangular-shaped plate that corresponds to the shape of the open front surface of the case 110. The cover 120 may be disposed between the first fan module 150 and the second fan module 160 to block a space between the first fan module 150 and the second fan module 160. That is, a space in which the first fan module 150 is installed and a space in which the second fan module 160 is installed may be physically separated by the cover 120.

The inlet 122 may be formed in the cover 120. The inlet 122 may be a passage connecting the space in which the first fan module 150 is installed with the space in which the second fan module 160 is installed, but is used as only a passage through which outside air flows into the first fan module 150. In the present embodiment, the inlet 122 is rarely used as a passage connecting the first fan module 150 with the second fan module 160.

The filter 140 and the grill 130 may be disposed in front of the cover 120. The filter 140 and the grill 130 may be disposed to be spaced at a predetermined distance from the cover 120 in the front-rear direction. A distance between the cover 120 and the filter 140 in the front-rear direction may be about a length corresponding to a length of the second fan module 160 in the front-rear direction.

According to the present embodiment, the first fan module 150 may be accommodated in a space between the first surface 111 of the case 110 and the cover 120. In addition, the second fan module 160 may be accommodated in a space between the cover 120 and the filter 140. In addition, the filter 140 may be accommodated in a space between the first fan module 150 and the grill 130.

Meanwhile, the case 110 may include a first case 110a and a second case 110b.

The first case 110a is disposed at the rear side of the first case 110a and the second case 110b and may accommodate the first fan module 150 therein. For example, the first case 110a may include the entirety of the first surface 111 and rear areas of the second surface 113 and the third surface 115. The scroll 117 may be formed in the first case 110a.

The second case 110b is disposed at the front side of the first case 110a and the second case 110b. That is, the second case 110b may be disposed in front of the first case 110a. For example, the second case 110b may include front areas of the second surface 113 and the third surface 115, and a front surface of the second case 110b may be open.

The first case 110a and the second case 110b may be connected in the front-rear direction and may be formed integrally. The first case 110a and the second case 110b may be connected in the front-rear direction and formed integrally. That is, the second case 110b may be formed to protrude upward more than the first case 110a so that an upper end of the second case 110b is disposed at a location higher than an upper end of the first case 110a.

The outlet 114 may be provided in the first case 110a provided at a lower height than the second case 110b. The outlet 114 may be formed to vertically pass through an upper end portion of the first case 110a. For example, the outlet 114 may be formed to vertically pass through the rear area of the second surface 113 disposed at the top.

Therefore, the second case 110b is formed to protrude upward more than the outlet 114 formed in the first case 110a as described above to block the outlet 114 at the front side.

The second fan module 160 may be accommodated in the second case 110b. In the present embodiment, it is shown that a pair of second fan modules 160 are accommodated inside the second case 110b. The pair of second fan modules 160 may be disposed to be spaced apart from each other in the left-right direction inside the second case 110b.

Any one of the pair of second fan modules 160 may be disposed at a location biased to the right side more than the first fan module 150. In addition, the other one of the pair of second fan modules 160 may be disposed at a location biased to the left side more than the first fan module 150. In the present embodiment, the pair of second fan modules 160 are disposed at locations adjacent to a right end portion and a left end portion of the second case 110b, respectively.

The second fan module 160 disposed as described above may be accommodated in a space surrounded by the second case 110b and the cover 120. More specifically, the second fan module 160 may be accommodated in a space surrounded by the second case 110b, the cover 120, and the grill 130.

### [Structure of the first fan module]

The first fan module 150 may include the first fan 151 and a first driver 153.

The first fan 151 may be accommodated in the accommodation space inside the main body 100, more specifically, in the scroll 117 provided in the first case 110a. The first fan 151 may suction outside air in the front-rear direction by rotating about the axis in the front-rear direction.

The first fan 151 suctioning the outside air as described above may discharge the outside air in the front-rear direction or in the left-right direction. In the present embodiment, it is shown that the first fan 151 is provided in a form of a centrifugal fan. This first fan 151 may rotate about the axis in the front-rear direction to suction air at the front side and discharge the air in a centrifugal direction.

The first driver 153 may provide a driving force for rotating the first fan 151. The first driver 153 may be provided in a form of an electric motor and installed in a form fixed to the case 110, more specifically, the first surface 111.

The first fan 151 rotated by the first driver 153 may generate a suction flow that induces a flow of the outside air so that the outside air at the front side of the mobile hood 1 is suctioned into the mobile hood 1.

Due to the suction flow generated by the first fan 151, the outside air may pass through the grill 130 and the filter 140 and flow into the mobile hood 1. The air introduced as described above may move to the rear side inside the mobile hood 1, pass through the inlet 122, and then may be suctioned into the first fan 151.

The air suctioned into the first fan 151 may be discharged centrifugally from the first fan 151, and the flow of the air discharged as described above may be guided to an upper end side of the case 110 by the scroll 117. The air moving upward as described above may be discharged to the upper side of the mobile hood 1 through the outlet 114 disposed at an upper end of the case 110.

### [Structure of the second fan module]

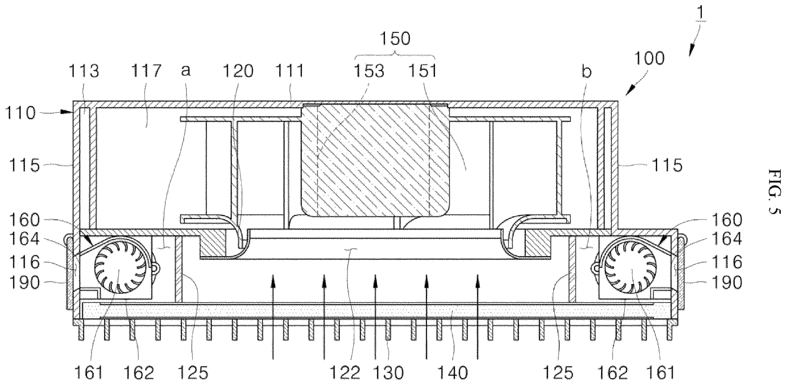

FIG. 5 is a cross-sectional view along line "V-V'" in FIG. 1.

Referring to FIGS. 2 to 5, the second fan module 160 may include a second fan 161 and a second driver 163.

The second fan 161 may be accommodated in the second case 110b. More specifically, the second fan 161 may be accommodated in a space surrounded by the second case 110b, the cover 120, and the grill 130. Therefore, the second fan 161 may be accommodated inside the main body 100 to be disposed in front of the first fan 151. In addition, the second fan 161 may rotate about the axis in the vertical direction.

In the present embodiment, it is shown that the second fan 161 suctions air from the front side and discharges the air in a direction between the front and the side. As an example, an inlet 162 of the second fan 161 may be disposed in a direction toward the front side, and an outlet 164 of the second fan 161 may be disposed in a direction between the front and the side, that is, in a direction toward a discharge port 116.

The second fan 161 may suction some of the air flowing into the mobile hood 1 by the suction flow generated by the first fan 151 at the front side. As described above, the air suctioned into the second fan 161 may be discharged to the outside of the mobile hood 1 and discharged in the direction between the front and the side.

In the present embodiment, it is shown that the second fan 161 is provided in a form of a tangential fan. The second fan 161 provided in the form of the tangential fan may suction air at the front side while rotating about the axis in the vertical direction and discharge the air in the centrifugal direction.

The second driver 163 may provide a driving force for rotating the second fan 161. The second driver 163 may be provided in a form of an electric motor and installed at the upper or lower side of the second fan 161. In the present embodiment, it is shown that the second driver 163 is installed at an upper end of the second fan 161.

The second fan 161 rotated by the second driver 163 may re-discharge some of the outside air flowing into the mobile hood 1 in the direction between the front and side of the mobile hood 1. According to the present embodiment, the second fan 161 may be disposed in front of the first fan 151. Therefore, some of the air moving toward the first fan 151 may be suctioned by the second fan 161 and then re-discharged toward the front side of the mobile hood 1.

In addition, the second fan 161 may be disposed not to overlap the first fan 151 in the front-rear direction. More specifically, a pair of second fans 161 may be disposed to be spaced apart from each other in the left-right direction with the first fan 151 interposed therebetween. That is, the pair of second fans 161 may be disposed to be spaced apart from each other in the left-right direction with the scroll 117 interposed therebetween.

Therefore, the second fan 161 may be disposed outside the first fan 151 in the left-right direction and disposed at a location biased to the outside more than the location of the suction flow guided by the first fan 151 in the left-right direction. Therefore, the flow of the air discharged by the second fan 161 may be formed at a location biased to the outside more than the location of the suction flow in the left-right direction.

As described above, the flow of the air discharged to the outside of the mobile hood 1 by the second fan 161 may act in a form of an air curtain at the side portion of the mobile hood 1.

For example, the second fan 161 disposed at the right side of the mobile hood 1 may discharge air in the direction between the front and right sides of the mobile hood 1. The flow of the air discharged as described above may act in the form of the air curtain at the right side of the mobile hood 1.

In addition, the second fan 161 disposed at the left side of the mobile hood 1 may discharge air in the direction between the front and left sides of the mobile hood 1. The flow of the air discharged as described above may act in the form of the air curtain at the left side of the mobile hood 1.

### [Peripheral structure of the second fan]

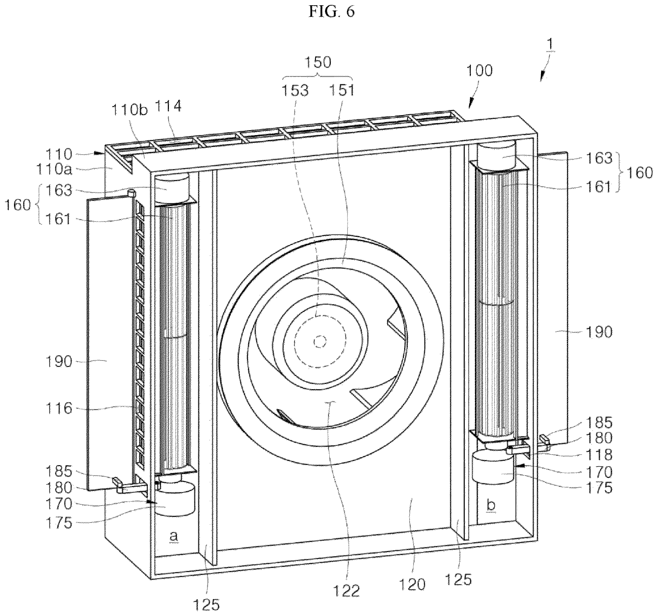

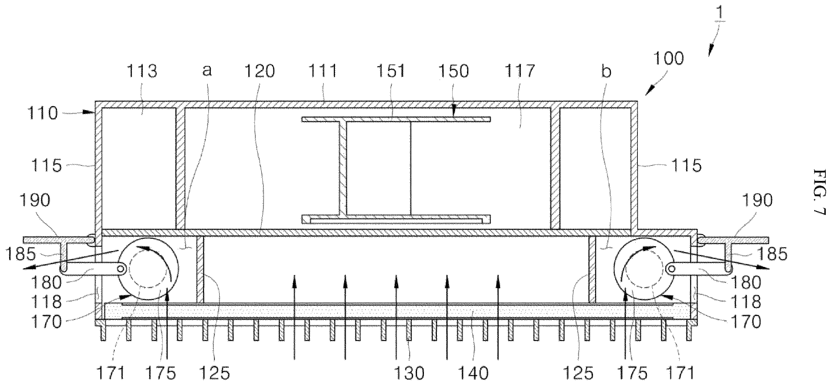

FIG. 6 is a perspective view showing a state in which a louver is opened in the mobile hood shown in FIG. 3, and FIG. 7 is a cross-sectional view showing a state in which the louver is opened in the mobile hood shown in FIG. 4.

Referring to FIGS. 6 and 7, the main body 100 may be provided with the discharge port 116. The discharge port 116 may form a passage for allowing the air suctioned by the second fan 161 to be discharged to the outside of the main body 100. The discharge port 116 may form a passage for opening the main body 100 in the left-right direction.

The discharge port 116 may be formed to pass through the third surface 115 in the left-right direction. The discharge port 116 may be formed in each of the pair of third surfaces 115 that form both side surfaces of the main body 100. In addition, the discharge port 116 may be formed in the second case 110b of the first case 110a and the second case 110b. That is, the discharge port 116 may be disposed at a location that overlaps the second fan 161 in the left-right direction.

The air discharged from the second fan 161 may be discharged to the outside of the mobile hood 1 through the adjacent discharge port 116 and discharged in the direction between the front side and the side.

According to the present embodiment, the main body 100 may further include a partition wall 125. The partition wall 125 may form a surface parallel to the third surface 115. With respect to the left and right direction, the partition wall 125 may be disposed between the third surface 115 and the inlet 122.

With respect to the front-rear direction, the partition wall 125 may be disposed between the cover 120 and the filter 140. That is, the cover 120 may be disposed between the first fan 151 and the second fan 161 and between the scroll 117 and the partition wall 125.

In the present embodiment, it is shown that a pair of partition walls 125 are provided in the main body 100. One of the partition walls 125 may be disposed between the third surface 115 disposed at the right side and the outlet 114. In addition, the other partition wall 125 may be disposed between the third side 115 disposed at the left side and the outlet 114.

An upper end of each partition 125 may be connected to the second surface 113 disposed thereabove, and a lower end of each partition 125 may be connected to the second surface 113 disposed thereunder. Therefore, a space (hereinafter referred to as "right space") surrounded by the third side 115, the pair of second surfaces 113, and the partition wall 125 that are disposed at the right side may be formed at the right side of the outlet 114. In addition, a space (hereinafter referred to as "left space") surrounded by the third surface 115, the pair of second surfaces 113, and the partition wall 125 that are disposed at the left side may be formed at the left side of the outlet 114.

Front surfaces of the right space and the left space are each open forward, and outside air may flow into the right space or the left space through the open front surfaces. The second fan module 160 may be accommodated inside the right space and the left space.

In addition, each discharge port 116 may communicate with a space in which the second fan 161 is disposed, that is, the right space or the left space. That is, the discharge port 116 disposed at the right side may communicate with the right space, and the discharge port 116 disposed at the left side may communicate with the left space.

Meanwhile, the mobile hood 1 according to the present embodiment may further include a louver 190. The louver 190 may be installed in the case 110 and provided to move between a closed location and an unfolded location.

The louver 190 may be formed in a shape that covers the third surface 115 and closes the discharge port 116 at the closed location. For example, the louver 190 may be provided in a form of a quadrangular panel having the size corresponding to the size of an area in which the discharge port 116 is formed. As an example, the louver 190 may be formed in the form of the panel having a shape similar to the shape of the third surface 115 in an area of the second case 110b.

The louver 190 may form a surface disposed behind the discharge port 116 when disposed at the unfolded location. At the unfolded position, the louver 190 may form a surface parallel to a line extending in a direction between the left-right direction and the front-rear direction and a line extending in the vertical direction.

The louver 190 may close the discharge port 116 at the closed location and may be unfolded to the outside of the main body 100 with an attitude protruding in the left-right direction from the main body 100 at the unfolded location.

To this end, the louver 190 may be rotatably installed on the main body 100. Specifically, the louver 190 may be installed on the main body 100, more specifically, the main body 100 so that the front end portion may be rotated in the left-right direction about the rear end portion coupled to the third surface 115. The rear end portion of the louver 190 may be coupled to the main body 100 at a location biased to the rear side more than the discharge port 116.

In addition, the mobile hood 1 according to the present embodiment may further include a third driver 170 and links 180 and 185 that are provided to rotate the louver 190.

The third driver 170 may generate a rotational force about the axis in the vertical direction. As an example, the third driver 170 may be provided in a form that includes an electric motor having a shaft that rotates about the axis in the vertical direction, and a cylindrical rotational member 175 rotated by the shaft.

The links 180 and 185 may be provided in a form that connects the third driver 170 with the louver 190 and includes the first link 180 and the second link 185.

The first link 180 may be connected to the third driver 170, more specifically, the rotational member 175. The first link 180 may be rotatably connected to the rotational member 175. That is, the first link 180 may be connected to the rotational member 175 to rotate about the axis in the vertical direction.

In addition, the first link 180 may be eccentrically connected to the rotational member 175. That is, the first link 180 may be connected to the rotational member 175 between the rotation center and outer circumferential surface of the rotational member 175. Therefore, when the rotational member 175 rotates, the locations of the first link 180 in the front-rear direction and the left-right direction may be changed.

The second link 185 may connect the first link 180 with the louver 190. The second link 185 may be rotatably connected to the first link 180 in a state of being fixed to the louver 190. The first link 180 and the second link 185 may be rotatably connected about the axis in the vertical direction.

As an example, the second link 185 may be formed integrally with the louver 190 and formed in a form that protrudes from the louver 190 in the vertical direction. In this case, the second link 185 may be formed in a form that protrudes from the louver 190 in the horizontal direction. In the present embodiment, the horizontal direction is defined as a direction parallel to a plane perpendicular to the vertical direction.

The third driver 170 may be disposed in the right space and the left space, respectively. That is, the third driver 170 may be accommodated inside the case 110. The first link 180 connected to the third driver 170 inside the case 110 should be connected to the louver 190 disposed outside the case 110.

To connect the first link 180 with the louver 190, a through hole 118 may be provided in the case 110, more specifically, in the third surface 115. The through hole 118 may be formed to pass through the third surface 115 in the left-right direction and may form a passage necessary for the first link 180 and the second link 185 to enter and exit the case 110.

In the present embodiment, it is shown that the third driver 170 is disposed under the second fan 161. Therefore, the through hole 118 may be disposed under the discharge port 116. In addition, it is preferable that the louver 190 is formed in a shape that may cover the discharge port 116 and the through hole 118 together at the closed location. It is because the air inside the mobile hood 1 may be discharged to the outside of the mobile hood 1 or the outside air may flow into the mobile hood 1 through both the discharge port 116 and the through hole 118.

As shown in FIGS. 3 and 4, in a state in which the louver 190 closes the discharge port 116 at the closed location, when the rotational member 175 is rotated in one direction according to an operation of the third driver 170, the first link 180 may protrude outward from the main body 100 while moving in the left-right direction.

Therefore, as shown in FIGS. 6 and 7, the louver 190 connected to the first link 180 through the second link 185 may be moved to the unfolded location by being rotated by the first link 180. As a result, the louver 190 may be laterally expanded to the outside of the main body 100 behind the discharge port 116 while opening the discharge port 116.

### [Operations of the second fan and the louver]

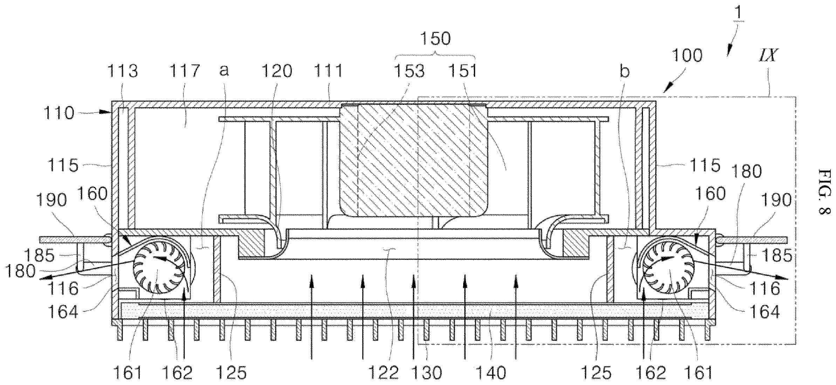

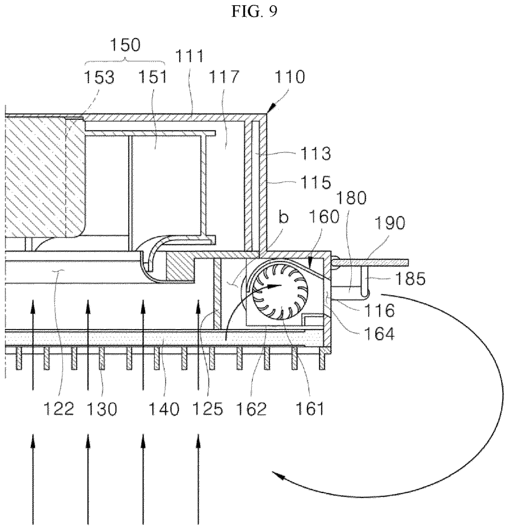

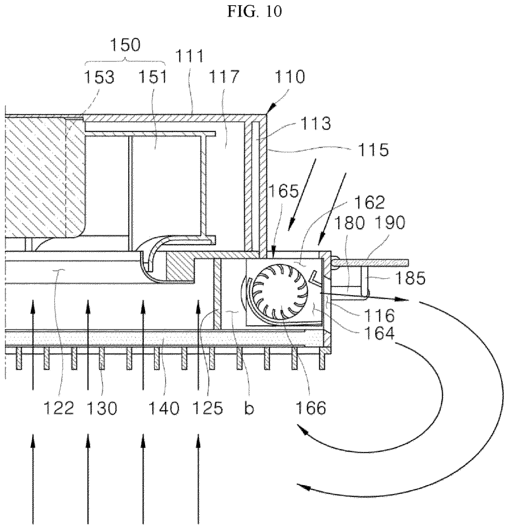

FIG. 8 is a cross-sectional view showing a state in which the louver is opened in the mobile hood shown in FIG. 5, FIG. 9 is an enlarged view of portion "IX" in FIG. 8, and FIG. 10 is a view showing another example of the mobile hood shown in FIG. 9.

Hereinafter, the operations of the second fan and the louver according to one embodiment of the present invention will be described with reference to FIGS. 3 to 10.

As shown in FIGS. 3 to 5, in a state in which the louver 190 is located at the closed location, the discharge port 116 and the through hole 118 are closed by the louver 190, and the second fan module 160 is not operated.

In this state, as shown in FIGS. 6 to 8, when the third driver 170 rotates the first link 180 in one direction, the first link 180 moves rearward and laterally to move the louver 190 to the unfolded location.

In this case, the louver 190 disposed at the right side of the main body 100 may be unfolded in a form that protrudes to the right side of the main body 100, and the louver 190 disposed at the left side of the main body 100 may be unfolded in a form that protrudes to the left side of the main body 100.

In addition, as shown in FIGS. 8 and 9, the operation of the second fan module 160 starts, and thus some of the air flowing into the mobile hood 1 may be suctioned by the second fan 161 and then discharged through the discharge port 116. As described above, the air discharged through the discharge port 116 may be discharged between the front side and the side. In this case, the louver 190 located behind the discharge port 116 may guide the discharge flow of the air.

As described above, the airflow discharged to the outside of the mobile hood 1 through the discharge port 116 may move in a direction between the front side and the side and may be discharged forward from the mobile hood 1. The flow of the air discharged as described above forms an air curtain in front of the mobile hood 1 and affects the flow of the air near the mobile hood 1.

For example, the air curtain formed as described above may block the flow of the air located in a lateral outer area of the air curtain and the mobile hood 1, thereby preventing the air located in the lateral outer area of the air curtain from being suctioned to the mobile hood 1.

Therefore, since a condition in which the air located in a lateral inner area of the air curtain may be suctioned into the mobile hood 1 may be effectively established, it is possible to more effectively suction polluted air generated in front of the mobile hood 1.

Meanwhile, FIG. 10 shows another example of the second fan.

Referring to FIG. 10, the second fan module 165 may include a second fan 161 provided in a form that suctions air from the rear side and discharges the air in a direction between the front side and the side. As an example, the inlet 162 of the second fan 161 may be disposed in a direction toward the rear side, and the outlet 164 of the second fan 161 may be disposed in a direction between the front side and the side, for example, in a direction toward the discharge port 116.

To purify the polluted air generated in the cooking process, the mobile hood 1 suctions the polluted air in a state in which the front surface faces a cooking vessel. Therefore, the air suctioned from the front side of the mobile hood 1 may be mainly the polluted air generated in the cooking process.

Upon cooking food, hot heat and high-temperature water vapor in addition to oil vapor and smoke are also generated together. Therefore, when the second fan module 160 discharges the air suctioned at the front side of the mobile hood 1 in a form of an air curtain, even when the air is in a state of being filtered by the filter 140, the flow in the form of the air curtain may cause discomfort to a user due to its heat, etc.

The second fan module 160 does not suction the air at the front side of the mobile hood 1, but suctions the air at the rear side of the mobile hood 1. That is, the second fan module 160 does not suction the high-temperature polluted air generated in the cooking process, but suctions the air at a location slightly away from the source of the polluted air.

Therefore, the second fan module 160 may form the air curtain in a cleaner and more refreshing state. Therefore, it is possible to more effectively suppress the high-temperature polluted air from flowing to the user and significantly reduce the discomfort felt by the user when the airflow forming the air curtain reaches the user.

### [Function and effect of the mobile hood]

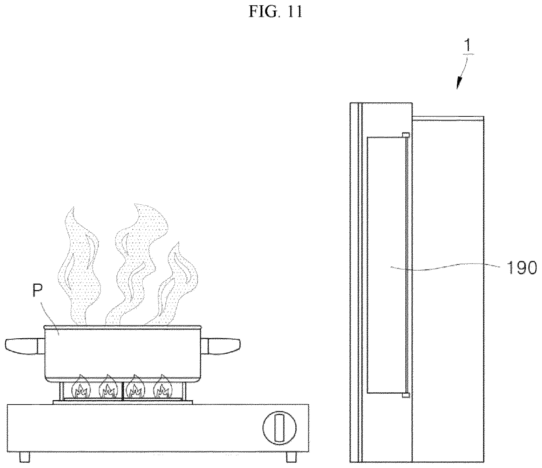

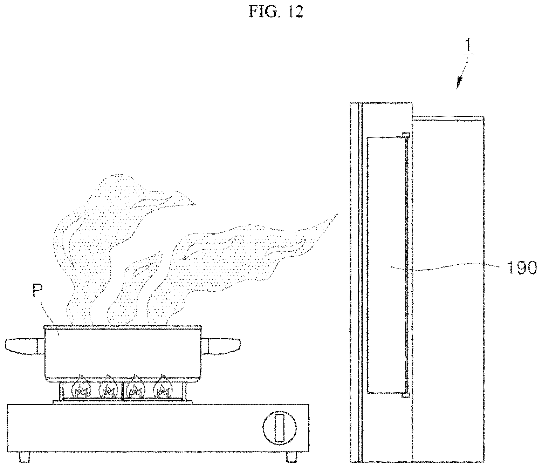

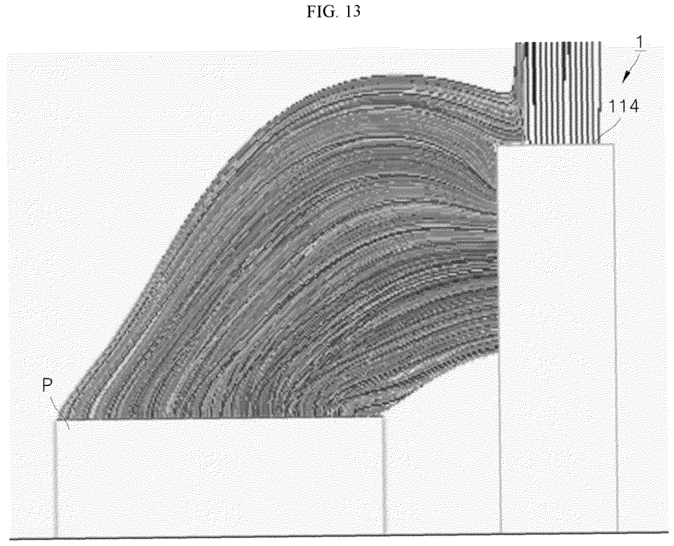

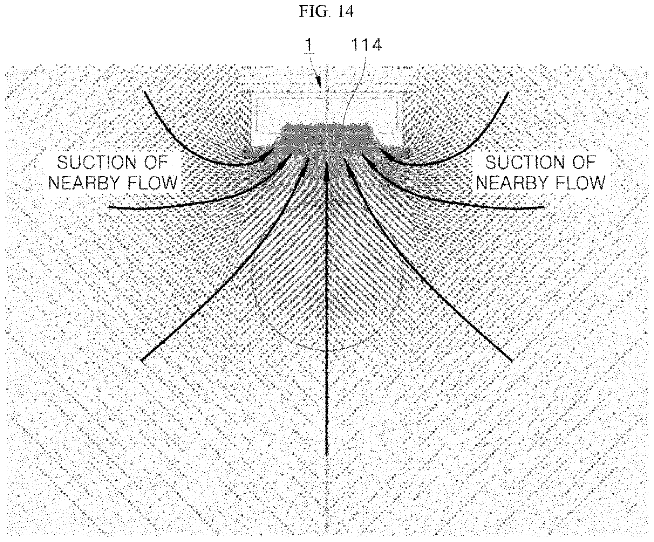

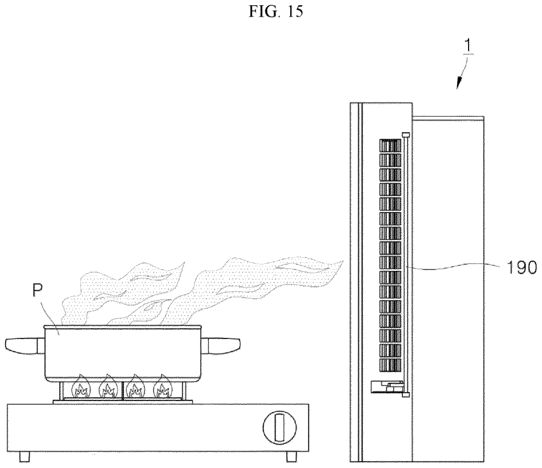

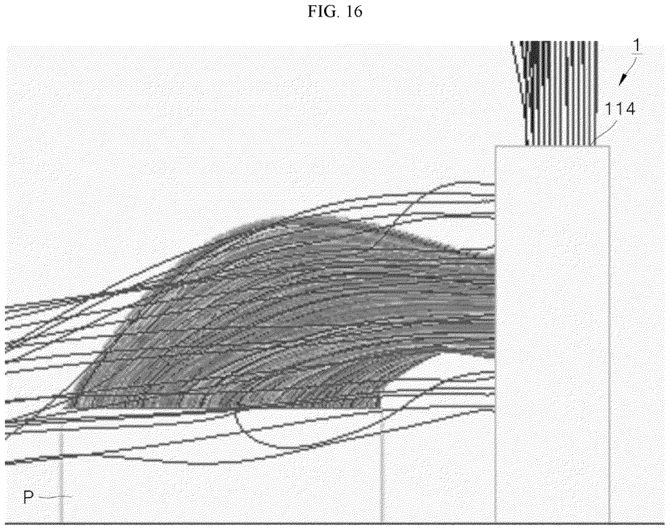

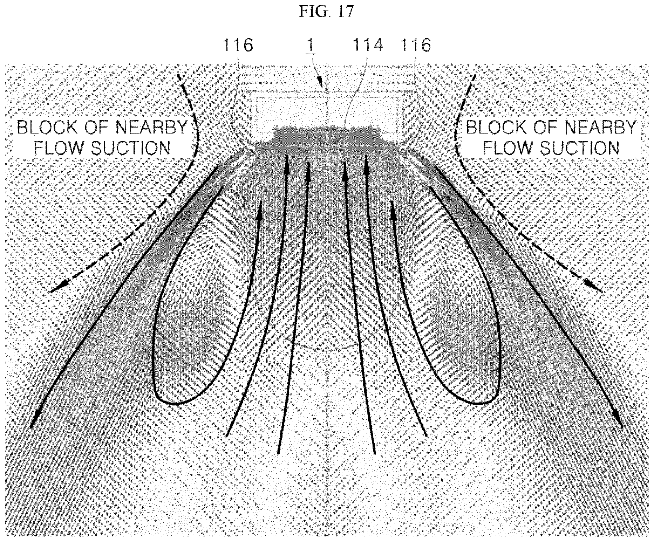

FIG. 11 is a view showing a state before the mobile hood according to one embodiment of the present invention is operated, and FIG. 12 is a view showing an operating state of only a first fan of the mobile hood shown in FIG. 11. In addition, FIG. 13 is a side view showing an airflow near the mobile hood in the operating state of the mobile hood shown in FIG. 12, and FIG. 14 is a top view showing an airflow near the mobile hood in the operating state of the mobile hood shown in FIG. 12. In addition, FIG. 15 is a view showing a simultaneous operating state of the first fan and a second fan of the mobile hood shown in FIG. 12, FIG. 16 is a side view showing an airflow near the mobile hood in the operating state of the mobile hood shown in FIG. 15, and FIG. 17 is a top view showing an airflow near the mobile hood in the operating state of the mobile hood shown in FIG. 15.

Hereinafter, the operation and effect of the mobile hood according to the present embodiment will be described with reference to FIGS. 11 to 17.

It should be noted that lines shown in FIGS. 13 and 16 are lines indicating an air volume, and the closer the color of the line indicating the air volume is to blue, the lower the air volume is, and the closer the color of the line indicating the air volume is to red, the higher the air volume is.

As shown in FIG. 11, the mobile hood 1 according to the present embodiment may be disposed adjacent to a cooking vessel P for generating polluted air in the cooking process. The mobile hood 1 may purify the polluted air generated during cooking while changing the location thereof as needed rather than being fixedly installed at any one location.

As an example, even when cooking is performed using a portable burner in a place other than a kitchen, for example, a room or a lounge, the mobile hood 1 according to the present embodiment may be disposed near its cooking location to purify the polluted air generated from the cooking vessel P heated by the portable burner.

As shown in FIG. 12, the mobile hood 1 according to the present embodiment may suction the polluted air generated from the cooking vessel P in a state of being disposed adjacent to the cooking vessel P in which cooking is performed.

The mobile hood 1 according to the present embodiment may be installed at various locations in various forms by freely changing the location and attitude thereof. The mobile hood 1 may effectively suction the polluted air generated from the cooking vessel P in a state in which the front surface thereof is disposed to face the cooking vessel P.

In a state in which only the first fan module is operated and the second fan module is not operated, as shown in FIGS. 12 to 14, not only the polluted air generated from the cooking vessel P is suctioned, but also the air at different locations not related to the location at which cooking is performed is suctioned.

For example, not only the air including the polluted air generated at the front side of the mobile hood 1 is suctioned, but also the air at the side or rear side of the mobile hood 1 is suctioned.

The suction power generated by the first fan module may spread and act in all directions near the mobile hood 1, thereby making it difficult to effectively suction the polluted air generated at the front side of the mobile hood 1.

That is, as the suction power generated by the first fan module is evenly dispersed and applied both to the front side and in other directions, the strength of the suction power acting on the front side of the mobile hood 1 inevitably becomes weaker accordingly.

Therefore, it is difficult for the smoke and pollutants generated from the cooking vessel P to be effectively suctioned into the mobile hood 1. That is, as the strength of the suction power acting on the front side of the mobile hood 1 weakens, a suction possible area of the mobile hood 1 is inevitably reduced.

In addition, due to the weakening of the strength of the suction power acting on the front side of the mobile hood 1, there may occur a phenomenon that the suction flow suctioned into the mobile hood 1 is affected by the exhaust flow discharged through the outlet 114.

That is, some of the suction flow in front of the mobile hood 1 at the top may not be suctioned into the mobile hood 1, and as shown in FIG. 13, there may occur a phenomenon that some joins the exhaust flow and flow out upward from the mobile hood 1.

Such a phenomenon may occur in a case where, as the rotational speed of the first fan increases, a strong suction power is generated by the first fan, thereby increasing a rate of the exhaust flow discharged through the outlet 114, but a rate of the suction flow in front of the mobile hood 1 may not reach the above rate.

For example, such a phenomenon may occur when the rotational speed of the first fan is increased to increase the suction power of the mobile hood 1.

In this case, since the polluted air may not properly be purified by the mobile hood 1 and may spread to the surroundings together with the exhaust flow discharged from the mobile hood 1, there may occur a problem that the pollutants rather spread to the kitchen or the entire interior by the mobile hood 1.

As shown in FIGS. 15 to 17, when the louver 190 is unfolded to the unfolded location to open the discharge port 116 and also operate the second fan module, air may be discharged through the discharge port 116.

The air discharged as described above may form an air curtain that surrounds the suction flow at both sides in the left-right direction. The air curtain allows the suction power generated by the first fan module to mainly act in the area surrounded by the air curtain, thereby increasing the strength of the suction flow generated in front of the mobile hood 1.

For example, as shown in FIG. 16, the air curtain may block the flow of the air located in the lateral outer area of the air curtain and the mobile hood 1, thereby preventing the air located in the lateral outer area of the air curtain from being suctioned into the mobile hood 1.

Therefore, since the condition necessary to increase the intensity of the flow of the air formed in the area surrounded by the air curtain, that is, the suction flow may be effectively established, it is possible to effectively increase the intensity of the suction flow, thereby more effectively suctioning the polluted air.

In addition, when the strength of the suction flow increases as described above, as shown in FIGS. 15 to 17, the suction flow is generated in a low-flow form and suctioned into the mobile hood 1.

When the suction flow is generated in a low-flow form as described above, a distance between the suction flow and the outlet 114 increases accordingly, and thus there is a low possibility that the suction flow will be affected by the exhaust flow discharged through the outlet 114.

In addition, since the intensity of the suction flow increases as the suction flow is generated in a low-flow form, the possibility of being affected by the exhaust flow discharged through the outlet 114 is further reduced.

Therefore, the mobile hood 1 according to the present embodiment can effectively contribute to suppressing the spread of pollutants in the cooking space by effectively suctioning, purifying, and then discharging the pollutants without spreading the pollutants.

In addition, as the strength of the suction flow increases as described above and the suction possible range of the mobile hood 1 increases, some of the discharge flow forming the air curtain may be affected by the suction flow to increase the amount of pollutants re-suctioned into the mobile hood 1. The air discharged through the discharge port 116 is in a state of being purified by already passing through the filter 140 once. When the air is suctioned back into the mobile hood 1 the air may pass through the filter 140 once more and may be re-purified.

While the mobile hood 1 is operating, the above phenomenon may occur repeatedly. Therefore, it is possible to achieve the n^{th} filtering effect in which air is filtered multiple times by the filter 140. Therefore, the mobile hood 1 according to the present embodiment can provide the more improved air purification effect.

Due to the characteristics of the mobile hood 1 provided to enable movement arrangement, the mobile hood 1 according to the present embodiment does not discharge the suctioned polluted air to the outside, filters the polluted air through the filter 140, and then re-discharges the polluted air therein.

Therefore, the mobile hood 1 according to the present embodiment needs to provide a much higher level of pollutant removal performance than a range hood in a form that suctions polluted air and then discharges the polluted air to the outside.

In addition, the mobile hood 1 according to the present embodiment does not form an upward suction flow at the top of the cooking vessel P, but forms a suction flow outside the cooking vessel P in the horizontal direction. The mobile hood 1 according to the present embodiment needs to provide a higher level of suction performance and pollutant removal performance than a range hood that forms an upward suction flow.

That is, since the mobile hood 1 according to the present embodiment forms the suction flow outside the cooking vessel P in the horizontal direction and re-discharges the suctioned polluted air therein without discharging the suctioned polluted air to the outside, the mobile hood 1 should provide a high level of suction performance and pollutant removal performance.

Considering such a point, the mobile hood 1 according to the present embodiment can improve suction performance by guiding the suction of the polluted air through the air curtain formed by the second fan module and at the same time, achieve the n^{th} filtering effect in which the polluted air is repeatedly suctioned multiple times and filtered.

The mobile hood 1 according to the present embodiment can further provide the following effects.

First, the mobile hood 1 according to the present embodiment can purify the polluted air generated during cooking while changing the location as needed rather than being fixedly installed at any one location. The mobile hood has an advantage that can be highly used because the mobile hood may be used by being moved to a place desired by the user, such as a kitchen, a dining table, a room, a lounge, a living room, or an outdoor.

Second, since the mobile hood 1 according to the present embodiment can provide the more improved suction performance and pollutant removal performance by forming the air curtain near the suction flow to increase the suction efficiency for the polluted air generated from a cooking object.

Third, the mobile hood 1 according to the present embodiment can provide the more improved pollutant removal performance by achieving the n^{th} filtering effect in which the polluted air is repeatedly suctioned and filtered multiple times.

The mobile hood 1 according to the present embodiment may be disposed to be freely moved to various locations rather than the typical hood installation place, thereby more efficiently collecting the pollutants generated in the cooking process and very effectively purifying polluted air near the cooking area.

Fourth, the mobile hood 1 according to the present embodiment can very effectively increase the collection efficiency for the pollutants without increasing the suction rate of the fan by increasing the suction efficiency for the polluted air using the air curtain as described above. Therefore, the mobile hood 1 according to the present embodiment can effectively increase the collection efficiency for pollutants without significantly increasing power consumption.

Fifth, the mobile hood 1 according to the present embodiment can improve the suction performance of the mobile hood 1 without the hassle of installing an additional structure by allowing the air curtain formed by the operation of the second fan module to serve as a structure such as a blocking film or an awning.

In addition, when the structure such as a blocking film or an awning is installed in the cooking space, the structure may interfere with the activity of a user who is cooking. In contrast, the mobile hood 1 according to the present embodiment can improve suction performance without interfering with the activity of the user who is cooking by allowing the air curtain formed by the operation of the second fan module to serve as the structure such as a blocking film or an awning.

Sixth, the mobile hood 1 according to the present embodiment may be provided in a shape having a small thickness sufficient to be installed in the narrow cooking space by arranging the second fan module on the side portion of the first fan module departing from the suction direction and discharge direction of the first fan module without arranging the first fan module and the second fan module in a line in a direction in which suction flow is generated.

Seventh, the mobile hood 1 according to the present embodiment can stably maintain the combustion of a heating device for generating flame, for example, a gas cook-top, and effectively remove the pollutants generated by heat generated by the corresponding heating device.

In the case of the range hood that uses a swirler or a vortex fan, there is a problem such as the fact that the vortex generated from the swirler or the vortex fan reach the flame of the gas cook-top, thereby causing the flame to shake and affecting the combustion of the gas cook-top.

In contrast, in the mobile hood 1 according to the present embodiment, like the discharge flow forming the air curtain that faces the side and front side without facing the front side toward the heating device, any discharge flow generated from the mobile hood 1 does not face the heating device.

Therefore, the mobile hood 1 according to the present embodiment can effectively improve the suction performance of the mobile hood 1 without affecting the combustion of the heating device that generates a flame, such as a gas cook-top.

Eighth, the mobile hood 1 according to the present embodiment can secure the sufficient suction performance necessary for removing the pollutants while effectively responding to the situation in which the user may feel inconvenience or discomfort by having the air curtain formation function that may be turned on/off appropriately depending on the situation.

In the case of the range hood using the swirler or the vortex fan, when the range hood is installed in a narrow space, there is a problem that the suction performance of the range hood is degraded because a vortex is not properly generated by the structure near the range hood.

In addition, in the case of the range hood, when the range hood is installed at a location very close to the user, for example, near a dining table, there is a problem that the user may feel inconvenience or discomfort due to the vortex formed by the swirler or the vortex fan.

In contrast, the mobile hood 1 according to the present embodiment may be provided so that the air curtain formation function may be turned on/off to appropriately turn the air curtain formation function on or off depending on the situation.

That is, when a space sufficient to form the air curtain may not be secured or the mobile hood 1 is disposed at a location very close to the user, or when the air curtain formation function is not required, the mobile hood 1 may be operated in a state in which the air curtain formation function is turned off.

In addition, when the mobile hood 1 according to the present embodiment is installed in the space sufficient to form the air curtain and there is no concern of the air curtain in contact with the user, it is possible to secure the suction performance sufficient to effectively remove the pollutants by turning the air curtain formation function on.

That is, the mobile hood 1 according to the present embodiment can provide both an operation mode in which preventing inconvenience or discomfort to the user is prioritized and an operation mode in which the more improved pollutant collection performance is provided. The user may operate the mobile hood 1 by selecting one of the two modes as needed.

### [Operational control of the mobile hood]

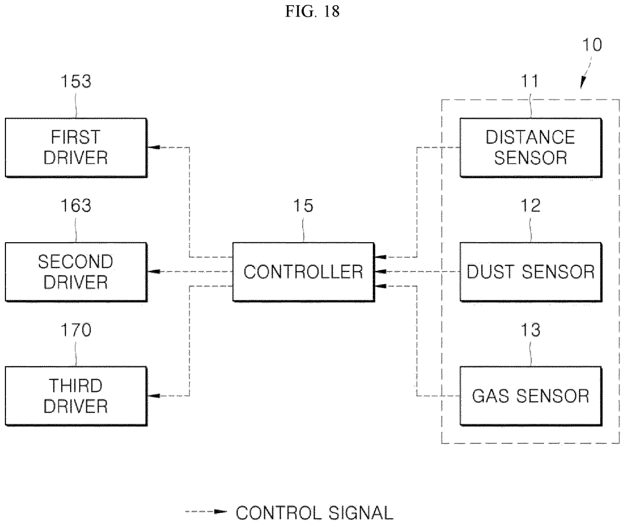

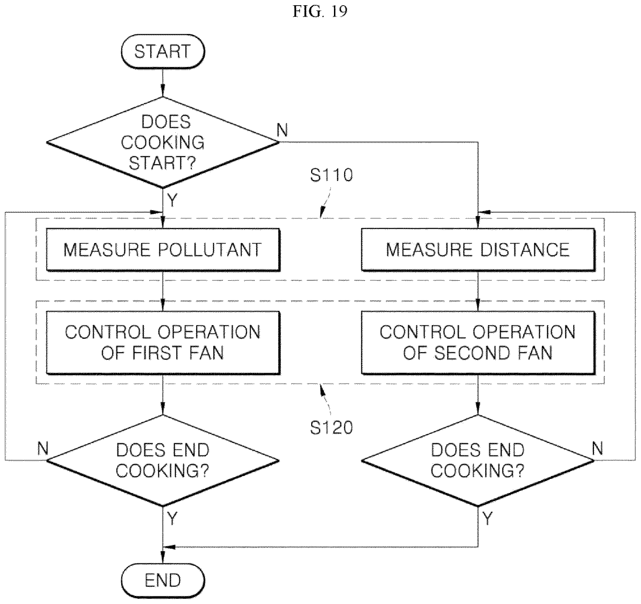

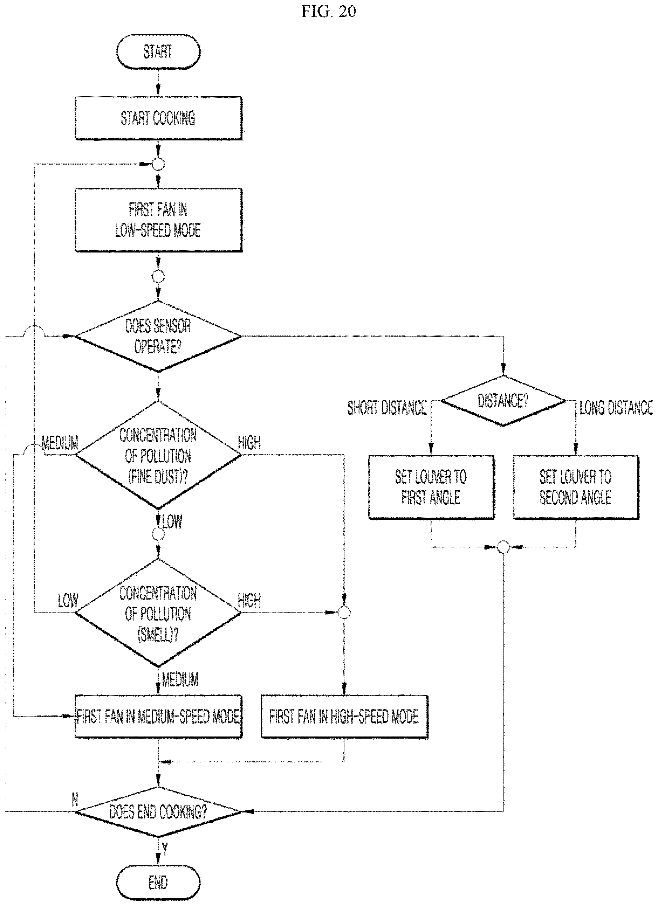

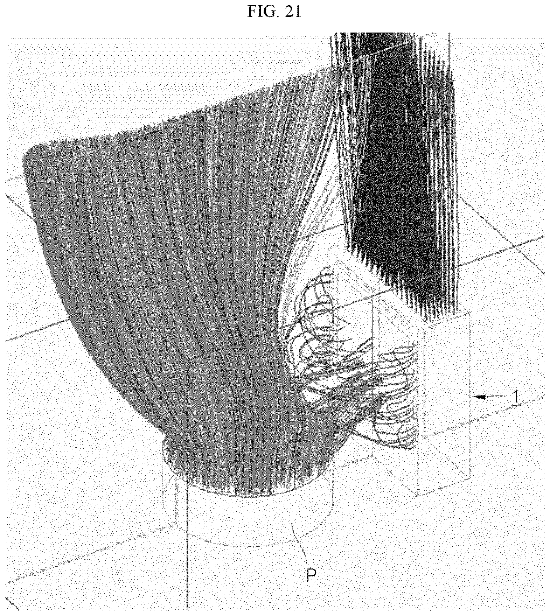

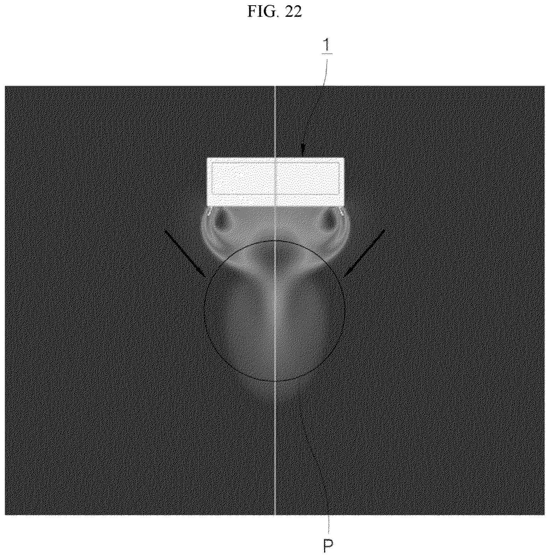

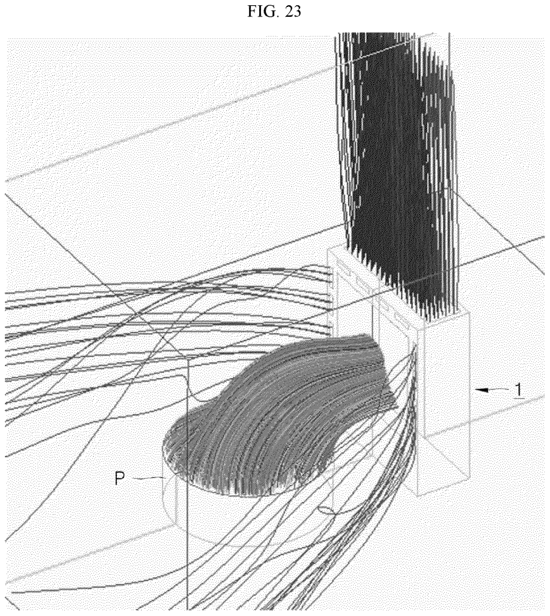

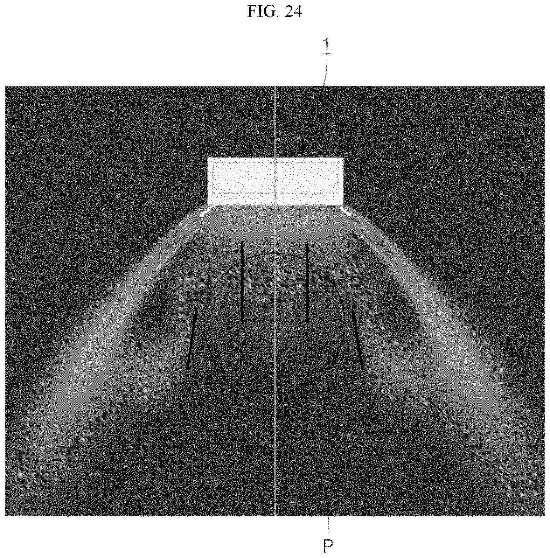

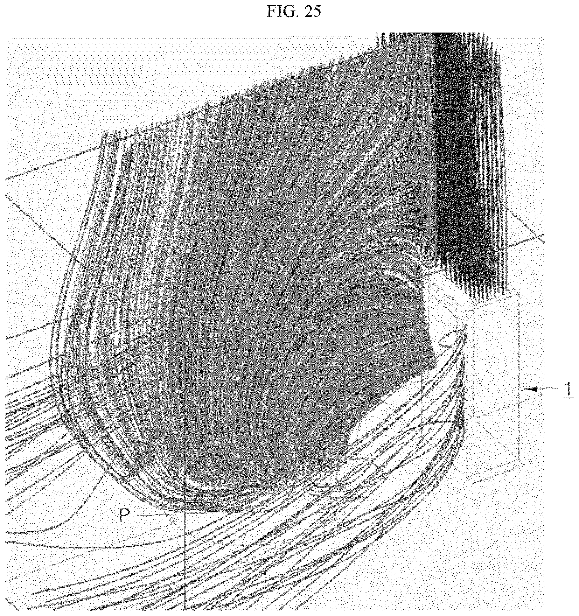

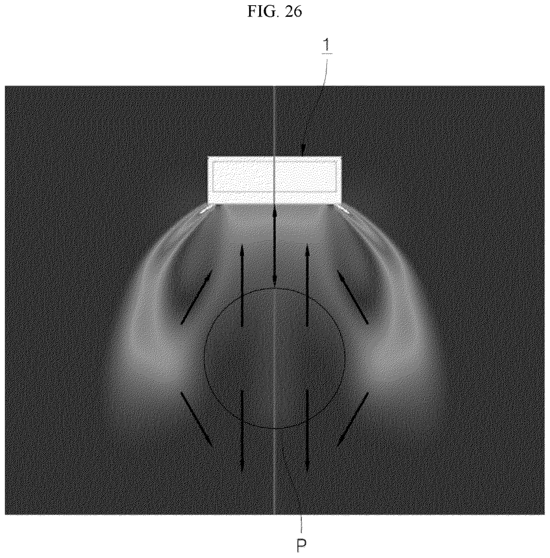

FIG. 18 is a configuration diagram schematically showing a configuration of the mobile hood according to one embodiment of the present invention, FIG. 19 is a flowchart schematically showing a method for controlling the mobile hood according to one embodiment of the present invention, and FIG. 20 is a flowchart specifically showing a process of controlling the mobile hood according to one embodiment of the present invention. In addition, FIG. 21 is a view showing an airflow near the mobile hood under the condition in which the louver is set to an angle smaller than a first angle when a distance between the mobile hood and a cooking object are a short distance, and FIG. 22 is a top view showing an airflow near the mobile hood shown in FIG. 21. In addition, FIG. 23 is a view showing an airflow near the mobile hood under the condition in which the louver is set to the first angle when the distance between the mobile hood and the cooking object are a short distance, and FIG. 24 is a top view showing an airflow near the mobile hood shown in FIG. 23. In addition, FIG. 25 is a view showing an airflow near the mobile hood under the condition in which the louver is set to the first angle when the distance between the mobile hood and a cooking object are a long distance, and FIG. 26 is a top view showing an airflow near the mobile hood shown in FIG. 25.

First, referring to FIGS. 15 and 18, the mobile hood 1 according to one embodiment of the present invention may further include a sensor module 10 and a controller 15.

The sensor module 10 is provided to detect at least any one of a distance to a cooking object, for example, the cooking vessel P, and the concentration of pollutants. The sensor module 10 may include at least any one of a distance sensor 11, a dust sensor 12, and a gas sensor 13. In the present embodiment, it is shown that the sensor module 10 includes all of the distance sensor 11, the dust sensor 12, and the gas sensor 13.

The distance sensor 11 may measure a distance between the mobile hood 1 and the cooking object. The distance sensor 11 may be provided as one of a laser distance sensor using a laser, an ultrasonic distance sensor using ultrasonic waves, an infrared distance sensor using infrared rays, etc.

The dust sensor 12 may measure the amount of dust in the air, and the gas sensor 13 may measure the amount of specific gas components contained in the air. Since structures and operations of the dust sensor 12 and the gas sensor 13 are known, descriptions thereof will be omitted here.

Hereinafter, a method for controlling the mobile hood according to one embodiment of the present invention will be described with reference to FIGS. 18 to 26.

As shown in FIGS. 18 to 20, when cooking starts and the operation of the mobile hood also starts, the controller 15 controls the operation of the first driver 153 so that the first fan rotates at a predetermined rate.

The controller 15 may adjust the rotational speed of the first fan by controlling the operation of the first driver 153. In the present embodiment, it is shown that the controller 15 may change the operation of the first fan into three modes.

Therefore, the controller 15 may change the operation of the first fan into a high-speed mode in which the rotational speed of the first fan is the fastest, a low-speed mode in which the rotational speed of the first fan is slower than the high-speed mode, and a medium speed mode in which the rotational speed of the first fan is a speed between the high-speed mode and the low-speed mode.

In the present embodiment, it is shown that the first fan is operated in the low-speed mode when the operation of the mobile hood starts. That is, the controller 15 may control the operation of the first driver 153 so that an initial operation of the first fan starts in the low-speed mode when the mobile hood is activated.

When the operation of the mobile hood starts as described above, at least any one of the distance measurement to the cooking object and the concentration measurement of pollutants may be performed by the sensor module 10 (S110).

The sensor module 10 may measure the concentration of the pollutants using at least any one of the dust sensor 12 and the gas sensor 13. In the present embodiment, it is shown that both the dust sensor 12 and the gas sensor 13 are used to measure the concentration of pollutant.

As an example, the concentration of pollutant may be divided into a plurality of levels based on information about the concentration of fine dust measured by the dust sensor 12. For example, the concentration of fine dust measured by the dust sensor 12 may be classified into three levels of high, medium, and low, and when the concentration of fine dust is at a high level, the concentration of pollutant may be classified as a high level, and when the concentration of fine dust is at a medium level, the concentration of pollutant may be classified as a medium level.

When the concentration of fine dust is at a low level, the concentration of pollutant may be finally determined by the odor measurement result measured by the gas sensor 13. For example, when the concentration of fine dust is at a low level, the concentration of pollutant may be classified as a high level when the measurement result by the gas sensor 13 is at a high level, and the concentration of pollutant may be classified as a medium level when the concentration of fine dust is at a medium level.

That is, when the concentration of fine dust measured by the dust sensor 12 is at a high or medium level, the classification of the concentration of pollutant may depend on the measurement result by the dust sensor 12. In addition, when the concentration of fine dust measured by the dust sensor 12 is at a low level, the classification of the concentration of pollutant may depend on the measurement result by the gas sensor 13.

As a result, even when only any one of the concentration of fine dust and the intensity of odor is at a predetermined level (e.g., a medium level), the concentration of pollutant may be classified into one or more levels.

In addition, the sensor module 10 may measure the distance between the mobile hood 1 and the cooking object using the distance sensor 11.

As an example, the distance between the mobile hood 1 and the cooking object may be partitioned into several areas based on the result measured by the distance sensor 11. For example, the distance between the mobile hood 1 and the cooking object measured by the distance sensor 11 may be classified into a short distance and a long distance.

In this time, the distance between the mobile hood 1 and the cooking object may be classified into the short distance and the long distance based on a set value, that is, a reference distance. For example, when a value measured by the distance sensor 11 is smaller than the reference distance, the value may be classified as the short distance, and when the value measured by the distance sensor 11 is greater than the reference distance, the value may be classified as the long distance.

The controller 15 may control an operation of at least any one of the first fan, the second fan, and the louver based on the measurement result by the sensor module 10 (S120).

As an example, the controller 15 may control the operation of the first fan based on the results of measurement by the dust sensor 12 and the gas sensor 13.

Therefore, when the concentration of pollutant is at a low level, the controller 15 may control the operation of the first driver 151 so that the first fan is operated in the low-speed mode. For example, when the concentration of fine dust measured by the dust sensor 12 and the concentration of gas measured by the gas sensor 13 are all at a low level, the first fan may be operated in the low-speed mode.

In addition, when the concentration of pollutant is at a low level, the operation of the first driver 151 may be controlled so that the first fan is operated in the medium-speed mode. For example, the concentration of fine dust measured by the dust sensor 12 is at a medium level, or the concentration of fine dust measured by the dust sensor 12 is at a low level and the concentration of gas measured by the gas sensor 13 is at a medium level, the first fan may be operated in the medium-speed mode.

In addition, when the concentration of pollutant is at a high level, the operation of the first driver 151 may be controlled so that the first fan is operated in the high-speed mode. For example, the concentration of fine dust measured by the dust sensor 12 is at a high level, or the concentration of fine dust measured by the dust sensor 12 is at a low level and the concentration of gas measured by the gas sensor 13 is at a high level, the first fan may be operated in the high-speed mode.

Therefore, in the mobile hood according to the present embodiment, the flow rate and air volume of the suction flow guided by the mobile hood may be automatically decreased by reducing the rotational speed of the first fan when the concentration of pollutant is low, and the flow rate and air volume of the suction flow guided by the mobile hood may be automatically increased when the concentration of pollutant is high.

That is, the mobile hood according to the present embodiment can quickly remove the pollutant by automatically increasing the flow rate and air volume of the suction flow when the concentration of pollutant is high and reduce unnecessary energy consumption by decreasing the rotational speed of the first fan when the concentration of pollutant is high.

Meanwhile, in the present embodiment, it is shown that operational control of the first fan is performed based on the results of measurement by the dust sensor 12 and the gas sensor 13, and operational control of at least any one of the second fan and the louver is performed based on the result of measurement by the distance sensor 11.

As an example, the controller 15 may control the operations of the second fan and the louver based on the result of measurement by the distance sensor 11.

Therefore, when the distance between the mobile hood 1 and the cooking object measured by the distance sensor 11 corresponds to the short distance, the controller 15 may control the operation of the third driver 170 to set the louver to a first angle. In addition, the controller 15 may control the operation of the third driver 170 to set the louver to a second angle when the value measured by the distance sensor 11 corresponds to the long distance.

According to the present embodiment, the louver 190 (see FIG. 10) is provided to move between the unfolded location and the closed location. The louver 190 may move between the unfolded location and the closed location while a front end portion rotates in the left-right direction about a rear end portion coupled to the third surface 115.

For example, when the louver is at the closed location, an angle formed between the third surface 115 (see FIG. 8) of the case 110 (see FIG. 8) and the louver is 0°, and when the louver is at the unfolded location and an angle formed by the axis in the front-rear direction and the louver is close to 90°, the louver may move between a location at which an angle formed with the third surface 115 is 0° and a location at which an angle formed with the third surface 115 is 90°.

In the present embodiment, it is shown that the first angle is set to an angle in the range of 0 to 90°, and the second angle is set to an angle greater than the first angle in the range of 0 to 90°. For example, when the first angle is set to an angle in the range of 40 to 50°, the second angle may be set to an angle in the range of 60 to 90°.

According to the present embodiment, when the value measured by the distance sensor 11 corresponds to the short distance, the controller 15 may control the operation of the third driver 170 to set the louver 190 to the first angle that is relatively smaller than the first angle and the second angle.

In addition, the controller 15 may control the operation of the third driver 170 to set the louver 190 to the second angle that is greater than the first angle when the value measured by the distance sensor 11 corresponds to the long distance.

That is, the controller 15 may adjust the attitude of the louver 190 in a manner that decreases an angle between a pair of louvers 190 when the distance between the mobile hood 1 and the cooking object is short and increases the angle between the pair of louvers 190 when the distance between the mobile hood 1 and the cooking object is long.

For example, as shown in FIGS. 25 and 26, when the angle between the louver 190 (see FIG. 8) and the third surface 115 (see FIG. 8) is set to an angle smaller than the first angle, for example, 30°, the discharge flow generated by the second fan 161 (see FIG. 8) acts as a flow that pushes the pollutants generated from the cooking vessel P forward that is away from the mobile hood 1.

Typically, some of the discharge flow discharged through the discharge port 116 (see FIG. 8) show the flow that is moved to the suction flow side by being drawn by the suction flow. As described above, the flow moved by the suction flow of the discharge flow may be re-suctioned into the mobile hood 1 according to the suction flow in the area surrounded by the air curtain formed by the discharge flow.

However, when the angle between the louver 190 (see FIG. 8) and the third surface 115 (see FIG. 8) is set too small, most of the discharge flow may show the flow that is moved to the suction flow side by being attracted by the suction flow without reaching the cooking vessel P side.

In this case, the discharge flow may not laterally spread to the outside of the cooking container P and moves to the cooking container P side. The flow moving as described above acts as a flow that pushes the pollutants generated from the cooking vessel P forward that is away from the mobile hood 1.

In this case, it is difficult for the smoke and pollutants generated from the cooking vessel P to be effectively suctioned into the mobile hood 1. In this case, there may be a problem that the polluted air may not be properly purified by the mobile hood 1 and spreads near the cooking container P.

As another example, as shown in FIGS. 23 and 24, when the distance between the mobile hood 1 and the cooking object is short and the angle between the louver and the third surface is set to the first angle, for example, 45°, the discharge flow generated by the second fan may act as a flow that helps the pollutants generated from the cooking vessel P be suctioned into the mobile hood 1.

When the attitude of the louver is set to an appropriate shape according to the distance between the mobile hood 1 and the cooking object, most of the discharge flow may form the air curtain that surrounds the cooking vessel P laterally from the outside.

In addition, some of the discharge flow may move to the suction flow side by being attracted by the suction flow in the area near the cooking vessel P. The flow of the air moving to the suction flow side as described above may act as the flow that is suctioned into the mobile hood 1 along the suction flow and helps the pollutants generated from the cooking vessel P be suctioned into the mobile hood 1.

As still another example, as shown in FIGS. 25 and 26, when the distance between the mobile hood 1 and the cooking object is long and the angle between the louver and the third surface is set to the first angle, for example, 45°, the discharge flow generated by the second fan may act as two type of flows.

That is, some of the discharge flow may act as a flow that helps the pollutants generated from the cooking vessel P be suctioned into the mobile hood 1, and the other of the discharge flow may act as a flow that pushes the pollutants generated from the cooking vessel P in a direction away from the mobile hood 1.

For example, some of the discharge flow may act as a flow that is moved to the suction flow side by being attracted by the suction flow in the area near the cooking vessel P and helps the pollutants generated from the cooking vessel P be suctioned into the mobile hood 1.

Meanwhile, when the distance between the mobile hood 1 and the cooking vessel P is long, it is difficult for the suction flow to affect the discharge flow in an area located in front of the cooking vessel P.

Therefore, in the area, some of the discharge flow is moved by being attracted by the suction flow, and may not move in the direction toward the mobile hood 1 and moves in a direction between the direction toward the suction flow and the front.

As described above, the flow moving in the direction between the direction toward the suction flow and the front acts as a flow that pushes the pollutants generated from the cooking vessel P forward that is away from the mobile hood 1.

As a result, it can be seen that the attitude of the louver should be appropriately adjusted according to the distance from the cooking object to efficiently suction the polluted air generated from the cooking object.

Meanwhile, when the rotational speed of the second fan is increased in the state shown in FIGS. 21 and 22, the intensity of the discharge flow generated from the second fan becomes stronger, and as a result, as shown in FIGS. 23 and 24, may act as a flow that helps the pollutants generated from the cooking vessel P be suctioned into the mobile hood 1.

In addition, when the rotational speed of the second fan is increased in the state shown in FIGS. 25 and 26, the intensity of the discharge flow generated from the second fan becomes stronger, and as a result, as shown in FIGS. 23 and 24, may act as only a flow that helps the pollutants generated from the cooking vessel P be suctioned into the mobile hood 1.

The mobile hood 1 according to the present embodiment can very effectively purify the polluted air generated in the cooking process by measuring the distance to the cooking object and the concentration of pollutant and controlling the operations of the first fan, the second fan, and the louver based on the measurement result.

In addition, the mobile hood 1 according to the present embodiment can improve the user convenience and at the same time, effectively increase the collection efficiency for the pollutants by automatically adjusting the strength of the suction power and the angle and strength of the air curtain according to the distance to the cooking object and the concentration of pollutant.

In addition, the mobile hood 1 according to the present embodiment may automatically adjust the strength of the suction power and the angle and strength of the air curtain according to the distance to the cooking object and the concentration of pollutant, and thus implement the n^{th} filtering effect in which the air to be purified is filtered multiple times by the filter, thereby providing the more improved air purification effect and thus more effectively improving the air quality of the air curtain.

### <Second embodiment of the mobile hood>

### [Overall structure of the cooking appliance]

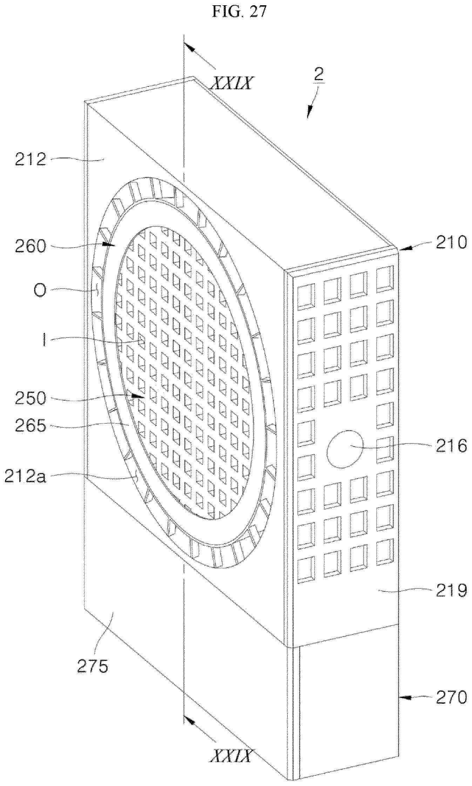

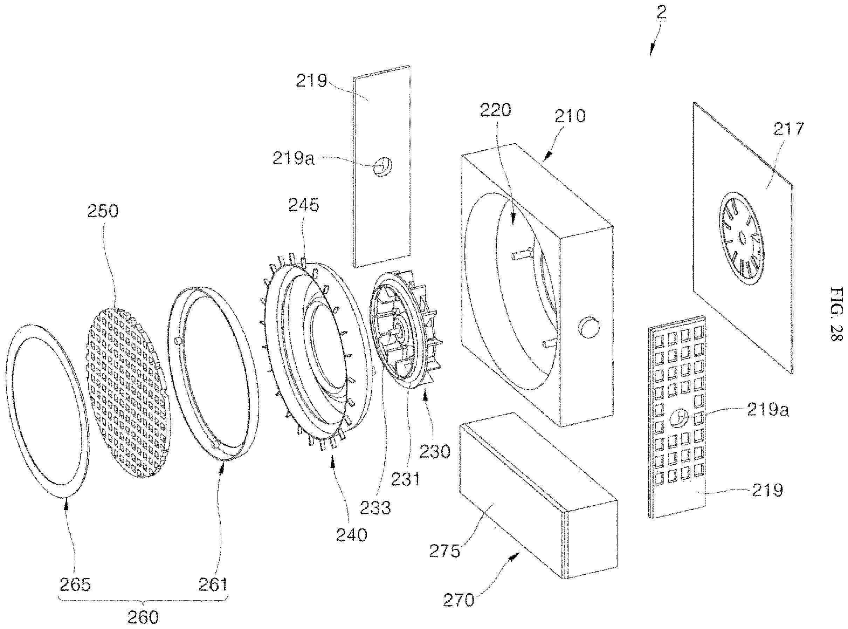

FIG. 27 is a perspective view showing a mobile hood according to another embodiment of the present invention, and FIG. 28 is an exploded perspective view showing a disassembled state of the mobile hood shown in FIG. 1.

Referring to FIGS. 27 and 28, a mobile hood 2 according to another embodiment of the present invention is not fixed to a specific location and may be installed at a location at which the polluted air needs to be purified. That is, a location of the mobile hood 2 according to the present embodiment may be freely changed as needed. The mobile hood 2 may include a case 210, a fan module 230, and a flow guide part.

The case 210 forms the appearance of the mobile hood 2 according to the present embodiment. In the present embodiment, it is shown that the case 210 is formed in a substantially hexahedral shape. An accommodation space having an open one side in the first direction may be formed inside the case 210.

The case 210 may accommodate components constituting the mobile hood 2, such as the fan module 230 and the moving guide part, therein. In addition, the case 210 may form the appearance of the mobile hood 2 and may be provided to be seated on the ground, an upper plate of a sink, a floor of a dining table, etc.

The mobile hood 2 according to the present embodiment provided with the case 210 may be provided in a form that may be easily moved to a place in which cooking is performed, such as a sink, a dining table, or an island dining table, without being fixedly installed at any one location.

Hereinafter, for convenience, one side in the first direction will be referred to as the front side, the other side in the first direction will be referred to as the rear side, one side in the second direction will be referred to as the upper side, the other side in the second direction will be referred to as the lower side, and one side and the other side in the third direction will be referred to as the right side and the left side, respectively.

An inlet I and an outlet O may be provided on the open front side of the case 210. The inlet I may form a passage for allowing outside air to flow into the fan module 230 on a front surface of the mobile hood 2. In addition, the outlet O may form a passage for allowing the air suctioned into the fan module 230 to be discharged to the outside of the mobile hood 2 on the front surface of the mobile hood 2.

The inlet I may form a passage that opens the inside of the case 210 in the first direction, that is, the front-back direction. In addition, the outlet O may form a passage that opens the inside of the case 210 in the front-rear direction.

In the present embodiment, it is shown that both the inlet I and the outlet O are formed on the front surface of the mobile hood 2, and the inlet I and the outlet O are arranged in a radial direction. Here, the radial direction is a direction perpendicular to the front-rear direction and is defined as a direction parallel to a direction in which a diameter of a rotational body about an axis in the front-rear direction extends.

The fan module 230 may be accommodated inside the case 210, that is, in the accommodation space. The fan module 230 may suction the outside air through the inlet I and discharge at least some of the suctioned air toward the outlet O.

The fan module 230 may suction the outside air in the front-rear direction and then re-discharge the suctioned air in the front-rear direction through the outlet O. For example, the fan module 230 may suction the outside air from the front side and then discharge the outside air back to the front side through the outlet O.

As described above, the flow of the air discharged by the fan module 230 may serve as an air curtain formed at the radial outside of the suction flow generated at the front side of the mobile hood 2 by the fan module 230. Detailed description thereof will be made below.

Like the fan module 230, the flow guide part may be accommodated inside the case 210, that is, in the accommodation space. The flow guide part is provided to guide the movement of the air discharged from the fan module 230 toward the outlet O. Detailed structure and operation of the flow guide part will be described below.

### [Structure of the case]

The case 210 may be formed in a substantially hexahedral shape, the accommodation space is formed inside the case 210, and the front surface of the case 210 is open. The case 210 may be formed in a hexahedral shape including a first surface 211, a pair of second surfaces 213, and a pair of third surfaces 215.

The first surface 211 may be provided in a form that forms a surface perpendicular to an axis in the front-rear direction. The first surface 211 may form a back surface of the case 210.

The pair of second surfaces 213 may be disposed to face each other vertically with the first surface 211 interposed therebetween. Each second surface 213 may be provided in a form that forms a surface perpendicular to an axis in the vertical direction. The second surface 213 may form top and bottom surfaces of the case 210.

The pair of third surfaces 215 may be disposed to face each other in the left-right directions with the first surface 211 and the second surface 213 interposed therebetween. Each third surface 215 may be provided in a form that forms a surface perpendicular to an axis in the left-right direction. The third surface 215 may form both side surfaces of the case 210.

The case 210 including the first surface 211, the second surface 213, and the third surface 215 may be formed in a form of a box of a substantially hexahedron shape in which the accommodation space is formed therein and a front surface is open.

The mobile hood 2 according to the present embodiment may further include a bracket plate 217. The bracket plate 217 may be installed at the rear side of the case 210. As an example, the bracket plate 217 may be coupled to the rear side of the first surface 211. The bracket plate 217 may serve to support the fan module 230 at the rear side of the fan module 230.

In addition, an installation hole 211a may be provided in the first surface 211. The installation hole 211a may be formed to pass through the first surface 211 in the front-rear direction. The installation hole 211a may form, on the case 210, a passage that connects the fan module 230 accommodated inside the case 210 with the bracket plate 217 installed at the rear side of the case 210.

In addition, the mobile hood 2 according to the present embodiment may further include a support panel 219. The support panel 219 may be coupled to the case 210 outside in the left-right direction to support the case 210. In the present embodiment, it is shown that the support panel 219 are disposed at each of both left and right sides of the case 210.

Each support panel 219 may be formed in a shape corresponding to the third surface 215 of the case 210, may cover the third surface 215 outside, and may be coupled to the side surface of the case 210.

A protruding shaft 216 may be provided in the case 210. The protruding shaft 216 may be provided on the third surface 215 and formed to protrude laterally from the third surface 215. The protruding shaft 216 may be provided at each of both sides of the case 210.

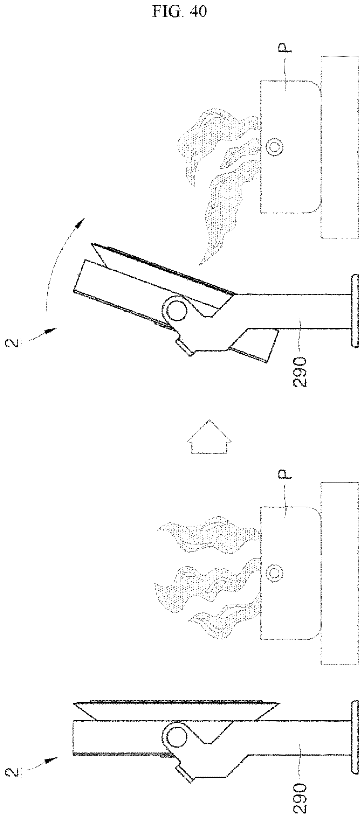

As an example, the protruding shaft 216 may be formed in a lying cylindrical shape. The protruding shaft 216 formed as described above may be rotatably coupled to a support 290 (see FIG. 40) provided to support the mobile hood 2. The protruding shaft 216 may be rotatably coupled to the support 290 to rotate about an axis in the lateral direction to allow the mobile hood 2 to be rotatably supported by the support.

The mobile hood 2 may be installed on the support 290 to be tilted by the protruding shaft 216.

Meanwhile, the support panel 219 may be coupled to the side surface of the case 210 by being coupled to the protruding shaft 216. To this end, a fitting hole 219a may be provided in the support panel 219. The fitting hole 219a may be formed to pass through the support panel 219 in the lateral direction.

The protruding shaft 216 may be inserted into the fitting hole 219a and fitted into the support panel 219 to firmly couple the support panel 219 to the side surface of the case 210. In this case, a lateral end portion of the protruding shaft 216 does not protrude outward from the support panel 219 and may be formed coplanarly with the support panel 219.

As described above, the support panel 219 coupled to the side surface of the case 210 can increase the durability of the mobile hood 2 by supporting the case 210.

In addition, the support panel 219 can prevent the protruding shaft 216 from protruding outward from the mobile hood 2 in a state in which the mobile hood 2 is not installed on the support panel and is disposed alone, thereby allowing the appearance of the mobile hood 2 to be smoothly maintained and contributing to suppressing the occurrence of safety accidents and damage to products due to the protruding portion of the mobile hood 2.

### [Structure of the fan module]

The fan module 230 may include a fan 231 and a driver 233.

The fan 231 may be accommodated in the accommodation space inside the case 210. This fan 231 may suction the outside air in the front-rear direction by rotating about the axis in the front-rear direction.

The fan 231 suctioning the outside air as described above may discharge the outside air in the front-rear direction or in the left-right direction. In the present embodiment, it is shown that the fan 231 is provided in a form of a centrifugal fan. The fan 231 may rotate about the axis in the front-rear direction to suction air at the front side and discharge the air in a centrifugal direction.

The driver 233 may provide a driving force for rotating the fan 231. As an example, the driver 233 may be provided in a form of an electric motor. The driver 233 may be connected to the fan 231 to rotate the fan 231 about the axis in the front-rear direction.

The fan 231 rotated by the driver 233 may generate a suction flow that induces a flow of the outside air so that the outside air at the front side of the mobile hood 2 is suctioned into the mobile hood 2.

The outside air may pass through the inlet I and flow into the mobile hood 2 by the suction flow generated by the fan 231. The air introduced as described above may move to the rear side inside the mobile hood 2 and may be suctioned into the fan 231 inside the case 210.

The air suctioned into the fan 231 may be discharged in the centrifugal direction, which is outward in the radial direction, from the fan 231, and the flow of the air discharged as described above may be guided to the outlet O of the case 210 by the flow guide part. The air moving toward the outlet O of the case 210 may be discharged to the front side of the mobile hood 2 through the outlet O.

### [Structure of the flow guide part]

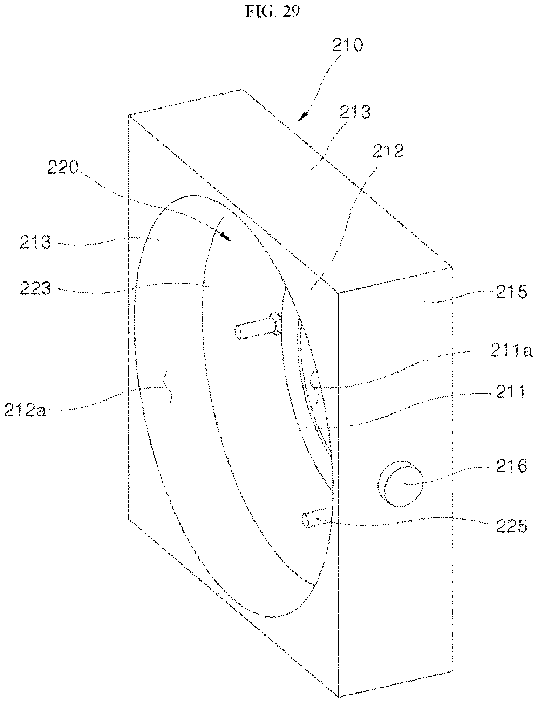

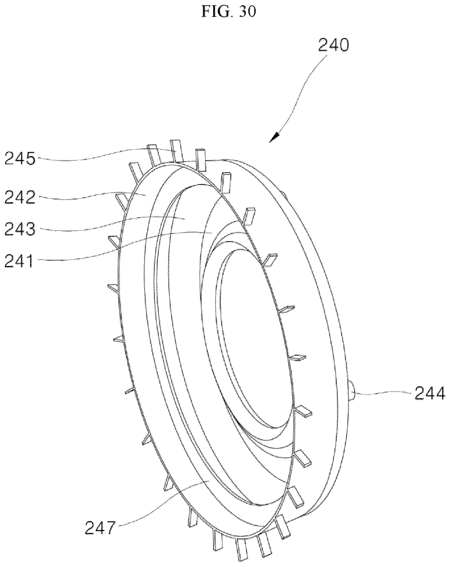

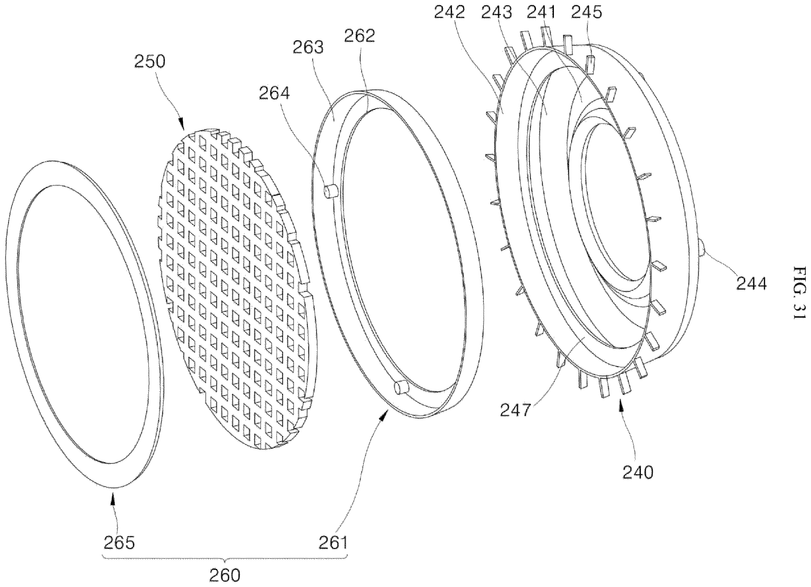

FIG. 29 is a cross-sectional view along line "XXIX-XXIX" in FIG. 27, FIG. 30 is a perspective view separately showing a case and a shroud according to another embodiment of the present invention, and FIG. 31 is a perspective view separately showing an orifice shell according to another embodiment of the present invention.

Referring to FIGS. 28 and 29, the flow guide part may form a discharge passage a connecting the fan 231 with the outlet O. The discharge passage a may guide the movement of the air discharged from the fan 231 so that the direction of the movement of the air moving toward the outlet O becomes a direction between the first direction and the centrifugal direction, that is, a direction between the front and the centrifugal direction.

The flow guide part forming the discharge passage may include a shroud 220 and an orifice shell 240.

The shroud 220 may be accommodated inside the case 210, that is, in the accommodation space. The shroud 220 is provided to surround the fan 231 outside in the radial direction. In the present embodiment, it is shown that the shroud 220 is formed integrally with the case 210. That is, the shroud 220 may be provided as a single component in which the case 210 and the shroud 220 are formed integrally. As an example, as shown in FIGS. 29 and 30, the shroud 220 may be provided in a form including an outer skirt portion 221 and an outer connection portion 223.

The outer skirt portion 221 may form a surface extending from the first surface 211 in a direction between the first direction and the centrifugal direction, that is, in a direction between the front and the centrifugal direction from the first surface 211. In addition, the outer connection portion 223 may connect the first surface 211 with the outer skirt portion 221 to be rounded.

In the present embodiment, it is shown that the outer skirt portion 221 is formed in a hollow cylindrical or truncated cone shape. The outer connection portion 223 that connects a rear end portion of the outer skirt portion 221 with the first surface 211 to be rounded may be formed in a bowl shape having a substantially circular cross section.

As another example, the shroud 220 may include the rear surface 211. When the case 210 and the shroud 220 are formed integrally, the rear surface 211 of the shroud 220 may replace the first surface 211 of the case 210.

Referring to FIGS. 29 to 31, the orifice shell 240 may be disposed at the front side of the shroud 220. The orifice shell 240 is provided to surround the fan 231 outside in the radial direction. The orifice shell 240 may be disposed between the fan 231 and the shroud 220 with respect to the radial direction. The discharge passage a formed by the flow guide part may be formed between the shroud 220 and the orifice shell 240.

In the present embodiment, it is shown that the orifice shell 240 includes a ring-shaped portion 241, an inner skirt portion 242, and an inner connection portion 243.

The ring-shaped portion 241 may be disposed in front of the first surface 211 and disposed to be spaced at a predetermined distance from the first surface 211 in the front-rear direction. In the present embodiment, it is shown that the ring-shaped portion 241 is formed in a substantially ring shape. For example, the ring-shaped portion 241 may be provided in a form of a hollow formed in a circular plate with respect to the axis in the front-rear direction. A first through hole 241a may be formed inside the ring-shaped portion 241 in the radial direction. The first through hole 241a may be formed to pass through the ring-shaped portion 241 in the front-rear direction.

The inner skirt portion 242 may form a surface extending from the ring-shaped portion 241 in a direction between the first direction and the centrifugal direction, that is, in a direction between the front and the centrifugal direction from the ring-shaped portion 241. In addition, the inner connection portion 243 may connect the first surface 211 with the outer skirt portion 221 to be rounded.

In the present embodiment, it is shown that like the outer skirt portion 221, the inner skirt portion 242 is formed in a hollow cylindrical or truncated cone shape. The inner connection portion 243 and the ring-shaped portion 241 connected to the rear end portion of the inner skirt portion 242 to be rounded may be formed in a bowl shape having a substantially circular cross section.

The inner connection portion 243 may be disposed in front of the outer connection portion 223. The fan 231 may be disposed between the outer connection portion 223 and the inner connection portion 243 with respect to the front-rear direction. In addition, the inner skirt portion 242 may be disposed between the fan 231 and the outer skirt portion 221 with respect to the radial direction.

The outer connection portion 223 and the inner connection portion 243 may be disposed to be spaced at a predetermined distance from each other in the front-rear direction. In addition, the outer skirt portion 221 and the inner skirt portion 242 may be disposed to be spaced at a predetermined distance from each other in the radial direction. The discharge passage a formed by the flow guide part may be formed between the inner skirt portion 242 and the outer skirt portion 221 and between the inner connection portion 243 and the outer connection portion 223.

According to the present embodiment, the shroud 220 and the ring-shaped portion 241, or the first surface 211 and the ring-shaped portion 241 may be spaced at a predetermined distance from each other in the front-rear direction and coupled in the front-rear direction. To this end, the shroud 220 may include a coupling protrusion 225, and the orifice shell 240 may include a coupling boss 244.

The coupling protrusion 225 may be formed to protrude from the first surface 211 or the shroud 220 in the first direction, more specifically, forward. In the present embodiment, it is shown that a plurality of coupling protrusions 225 are disposed in a form that surrounds the installation hole 211a.

In this case, each coupling protrusion 225 may be disposed to be spaced at a predetermined distance from each other in a circumferential direction of the installation hole 211a. In addition, each coupling protrusion 225 may be disposed outward from the fan 231 in the radial direction so as not to interfere with the fan 231 in the process of being coupled to the coupling boss 244.

The coupling boss 244 may be provided on the first surface 211 or one side surface of the ring-shaped portion 241 facing the coupling protrusion 225. For example, the coupling boss 244 may be provided on a rear surface of the ring-shaped portion 241. In the present embodiment, it is shown that a plurality of coupling bosses 244 are disposed in a form that surrounds the first through hole 241a.

The orifice shell 240 may be provided with the coupling bosses 244 corresponding one-to-one to the coupling protrusions 225, and the coupling bosses 244 may be disposed at locations overlapping the coupling protrusions 225 in the front-rear direction. In addition, each coupling boss 244 may be disposed outside the fan 231 in the radial direction so as not to interfere with the fan 231 in the process of being coupled to the coupling protrusion 225.

The coupling boss 244 provided as described above may be coupled to the coupling protrusion 225 in the front-rear direction. In the present embodiment, it is shown that the coupling protrusion 225 is inserted into the coupling boss 244 and coupled by being fitted into the coupling boss 244.

The coupling protrusion 225 and the coupling boss 244 may be coupled at a plurality of points in the circumferential direction of the ring-shaped portion 241. Therefore, the shroud 220 and the orifice shell 240 may be stably coupled, and the shroud 220 and the orifice shell 240 may be coupled in a form in which the shroud 220 and the orifice shell 240 are spaced at a predetermined distance from each other in the front-rear direction.

The orifice shell 240 may be spaced by about a length of the coupling protrusion 225 in the front-rear direction from the shroud 220 and installed at the front side of the shroud 220. In this case, a distance between the shroud 220 and the orifice shell 240 may be set to correspond to about the length of the fan module 230 in the front-rear direction.

As described above, the orifice shell 240 may be installed at the front side of the shroud 220 in a form in which the shroud 220 and the orifice shell 240 are spaced at a predetermined distance from each other in the front-rear direction, thereby effectively securing a space necessary to install the fan module 230 and forming the discharge passage a having a sufficient width between the shroud 220 and the orifice shell 240.

### [Filter and its support structure]

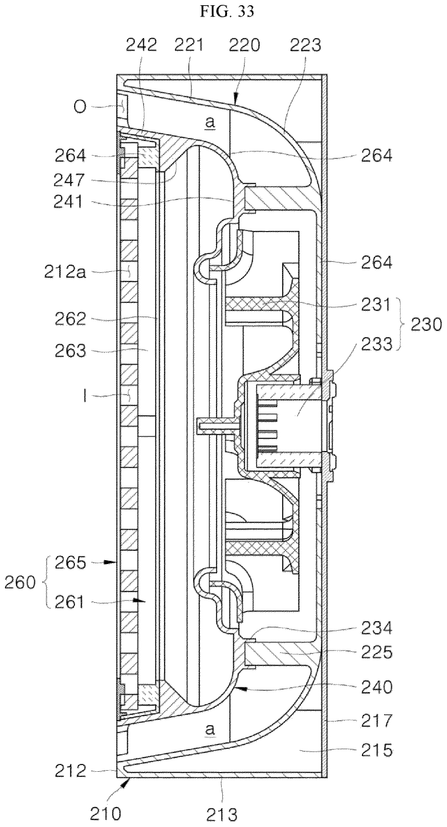

FIG. 33 is a perspective view separately showing an orifice shell, a filter, and a fixing cover according to another embodiment of the present invention.

Referring to FIGS. 29 and 33, the mobile hood 2 according to the present embodiment may further include a filter 250. The filter 250 may be disposed between the inlet I and the fan 231, that is, at the front side of the fan 231. The filter 250 may serve to filter the outside air suctioned into the fan 231.

The filter 250 may be formed in a shape corresponding to a shape of a second through-hole 212a or a front shape of the orifice shell 240. In the present embodiment, it is shown that the filter 250 is formed in a circle corresponding to the shape of the front surface of the orifice shell 240.

The filter 250 may be provided in a form including at least any one of a pre-filter, an oil-mist filter/grease filter, an odor filter, a dust filter, a deodorizing filter, and a sterilizing filter.

The pre-filter may be used to catch large dust and oil particles, and the oil mist filter may be used to remove oil vapor generated during cooking. In addition, the deodorizing filter may be formed of activated carbon, etc., which removes odors, and the dust filter is a filter used to remove fine dust.

The filter 250 may be any one of the filters or formed in combination of the filters.

Meanwhile, the shroud 220 may further include support wings 247. The support wing 247 may protrude from the inner skirt portion 242 in a centripetal direction that is inward in the radial direction. As an example, the support wing 247 may be formed to protrude in a ring shape from an inner circumferential surface of the inner skirt portion 242. The support wings 247 may serve to restrict the locations of the filter 250 in the front-rear direction.

In addition, the mobile hood 2 according to the present embodiment may further include a fixing cover 260. The fixing cover 260 may fix the filter 250 to the orifice shell 240. The fixing cover 260 may be in contact with the support wings 247 and coupled to the orifice shell 240.

The fixing cover 260 may include a first fixing cover portion 261 and a second fixing cover portion 265.

The first fixing cover portion 261 may be formed in a shape including a ring shape similar to the shape of the support wing 247. The first fixing cover portion 261 may be coupled to the inside of the inner skirt portion 242 in the radial direction so that a rear end portion thereof is in contact with the support wings 247. As described above, the first fixing cover portion 261 coupled to the orifice shell 240 may support the filter 250 at the rear side.

In the present embodiment, it is shown that the first fixing cover portion 261 includes a support surface 262 and an extension surface 263.

The support surface 262 may be formed in a ring shape corresponding to the support wing 247. The support surface 262 may be disposed between the support wings 247 and the filter 250 with respect to the front-rear direction.

The extension surface 263 may extend from the support surface 262 in the front-rear direction. In the present embodiment, it is shown that the extension surface 263 extends forward from the support surface 262. The extension surface 263 may be disposed between the inner skirt portion 242 and the filter 250 with respect to the radial direction.

As described above, the first fixing cover portion 261 including the support surface 262 and the extension surface 263 may support the filter 250 at the rear side and the radial outside of the filter 250.

A plurality of support protrusions 264 may be arranged in a circumferential direction of the support surface 262 on the first fixing cover portion 261. Each support protrusion 264 may be formed to protrude forward from the support surface 262 and may support the filter 250 at the rear side.

The filter 250 may be supported by the support protrusion 264 and disposed to be spaced at a predetermined distance from the support surface 262. Therefore, it is possible to decrease a contact area between the filter 250 and the first fixing cover portion 261 and increase an area through which air may pass of the filter 250 accordingly. As a result, it is possible to effectively increase the flow rate and air volume of the suction flow that passes through the filter 250 and flows into the mobile hood 2.

The second fixing cover portion 265 is a component disposed at the front side of the fixing cover 260. The second fixing cover portion 265 may be disposed at the frontmost side of the mobile hood 2 together with a cover surface 212 of the case 210 to be described below to form the appearance of the front surface of the mobile hood 2.

The second fixing cover portion 265 may support the filter 250 at the front side and may be coupled to the first fixing cover portion 261 or the inner skirt portion 242. The filter 250 may be pressed in the front-rear direction by the first fixing cover portion 261 at the rear side and the second fixing cover portion 265 at the front side and coupled to the orifice shell 240 in a state of being fixed to the inside of the fixing cover 260.

### [Formation structures of the inlet, the discharge port, and the discharge passage]

Referring to FIGS. 27 to 29, the case 210 may further include the cover surface 212. The cover surface 212 may be disposed at a location biased to the front side more than the fan 231 and may form a surface perpendicular to the front-rear direction. The cover surface 212 may be disposed at the front side of the case 210 to form the front surface of the case 210.

The second through hole 212a may be provided in the cover surface 212. The second through hole 212a may be formed to pass through the cover surface 212 in the front-rear direction. In the present embodiment, it is shown that the second through hole 212a occupies most of the cover surface 212. For example, 2/3 or more of the cover surface 212 may be occupied by the second through hole 212a.

The second through hole 212a formed as described above may communicate with the first through hole 241a in the front-rear direction. In addition, the first through-hole 241a may communicate with the discharge passage a in the radial direction, and the discharge passage a may communicate with the second through-hole 212a in the front-rear direction. That is, the first through hole 241a, the second through hole 212a, and the discharge passage a may communicate with each other in the case 210.

Referring to FIGS. 29 to 31, the outer skirt portion 221 may be connected to an inner circumferential surface of the cover surface 212 surrounding the second through hole 212a. According to the present embodiment, the rear end portion of the outer skirt portion 221 may be connected to the outer connection portion 223, and the outer connection portion 223 may be connected to the rear side of the first through hole 241a outside the first through hole 241a in the radial direction. In addition, a front end portion of the outer skirt portion 221 may be connected to the inner circumferential surface of the cover surface 212.

As an example, the case 210 and the shroud 220 may be formed integrally, and the cover surface 212 of the case 210 formed integrally and the outer skirt portion 221 of the shroud 220 may be connected integrally.

The inner skirt portion 242 may be disposed to be spaced at a predetermined distance from the outer skirt portion 221 in the radial direction in the second through hole 212a. According to the present embodiment, the rear end portion of the inner skirt portion 242 may be connected to the inner connection portion 243, the inner connection portion 243 may be connected to the ring-shaped portion 241, and the first through hole 241a may be formed.

The orifice shell 240 may be disposed in the area surrounded by the shroud 220. That is, the ring-shaped portion 241 that is a portion disposed at the rearmost part of the orifice shell 240 may be disposed in front of the rearmost portion of the shroud 220, and the inner skirt portion 242 and the inner connection portion 243 may be disposed inside the shroud 220 in the radial direction.

A front end portion of the inner skirt portion 242 disposed inside the second through hole 212a may also be disposed inside the outer skirt portion 221 in the radial direction. In addition, the front end portion of the inner skirt portion 242 may be spaced at a predetermined distance from the front end portion of the outer skirt portion 221 in the radial direction.

Therefore, the second through hole 212a may be partitioned into the inlet I and the outlet O using the inner skirt portion 242 as the boundary. Since both the inlet I and the outlet O are disposed on the second through hole 212a, the inlet I and the outlet O may be arranged coplanarly in the radial direction. Among them, the inlet I may be disposed inside the inner skirt portion 242 in the radial direction, and the outlet O may be disposed outside the inner skirt portion 242 in the radial direction.

The filter 250 may be disposed at the rear side of the inlet I. That is, the filter 250 may be disposed between the inlet I and the fan 231, and the air introduced through the inlet I may be suctioned into the fan 231 after passing through the filter 250.

In contrast, the air moving to the outlet O through the discharge passage a does not pass through the filter 250. It is because the filter 250 is not disposed on the discharge passage a connected to the outlet O.

Meanwhile, the mobile hood 2 according to the present embodiment may further include a plurality of blades 245. The blade 245 may be disposed in the second through hole 212a, more specifically, at the outlet O. The plurality of blades 245 may be arranged to be spaced a predetermined distance from each other in a circumferential direction of the second through hole 212a.

As an example, the blade 245 may connect the inner skirt portion 242 with the outer skirt portion 221. As another example, the blade 245 may connect the inner circumferential surface of the cover surface 212 with the outer skirt portion 221. In the present embodiment, it is shown that the blade 245 connects the inner skirt portion 242 with the outer skirt portion 221.

In addition, the blade 245 may be provided on the orifice shell 240. Therefore, the plurality of blades 245 may be provided on an outer circumferential surface of the outer skirt portion 221 in a circumferential direction of the outer skirt portion 221. Each blade 245 may be formed to protrude from the front end portion of the outer skirt portion 221 in the centrifugal direction.

The blades 245 may be spaced at a predetermined distance from each other in the circumferential direction of the outer skirt portion 221, and an outer end portion of the blade 245 in the radial direction may be in contact with the inner circumferential surface of the cover surface 212 or an inner circumferential surface of the outer skirt portion 221. In the present embodiment, it is shown that the outer end portion of the blade 245 in the radial direction is in contact with the inner circumferential surface of the outer skirt portion 221.

As an example, the coupling between the orifice shell 240 on which the blade 245 is provided and the shroud may include two types of couplings. One of the two couplings is the coupling between the coupling protrusion 225 and the coupling boss 244 that have been already described. In addition, the other is the coupling between the outer skirt portion 221 and the blade 245.

The coupling between the outer skirt portion 221 and the blade 245 may be in a form in which the blade 245 presses an inner surface of the outer skirt portion 221 and is forcefully fitted into the outer skirt portion 221.

Therefore, the blade 245 may be stably fixed inside the orifice shell, and in addition, a coupling portion between the orifice shell 240 and the shroud may be added to the front sides of the orifice shell 240 and the shroud 220, thereby more stably maintaining a fixed state between the orifice shell 240 and the shroud 220.

The blade 245 provided as above may provide the following functions.

First, the blade 245 supports the inner skirt portion 242 and the outer skirt portion 221 while being connected by the blade 245, and thus a shape of the outlet O formed on the front surface of the mobile hood 2 can be stably maintained.

Second, the blade 245 may guide the flow of the air discharged from the outlet O. For example, the blade 245 can increase a discharge distance of the discharge flow by improving the straightness of the air discharged from the outlet O and serve to guide the direction of the movement of the air discharged from the outlet O.

Third, the blade 245 may also serve as a blocking structure for suppressing large-sized foreign substance from permeating the mobile hood 2 through the outlet O. Unlike the inlet I, the filter 250 is not disposed at the rear side of the outlet O, and thus there is a possibility that foreign substance may permeate the mobile hood 2 through the outlet O.

The blade 245 disposed at the outlet O may serve as a blocking structure for suppressing large-sized foreign substance from permeating the mobile hood 2 through the outlet O, thereby contributing to preventing the outlet O from being clogged or damage to an internal component of the mobile hood 2 due to the large-sized foreign substance.

In the present embodiment, it is shown that the blade 245 is provided on the orifice shell 240, but the present invention is not limited thereto. As another example, various modified embodiments related to the blade 245 are possible, such as the blade 245 being provided on the shroud 220.

According to the above-described structure of the mobile hood 2, the inlet I and the outlet O may be disposed at a location biased to the front side more than the fan 231. In addition, the outlet O may be disposed outside the inlet I with respect to the radial direction.

Therefore, in the mobile hood 2 according to the present embodiment, outside air is suctioned through the inlet I disposed in front of the fan 231. In addition, the air suctioned into the mobile hood 2 by the fan 231 may be discharged forward from the fan 231 and discharged through the outlet O disposed outside the inlet I in the radial direction.

That is, the suction of the outside air into the mobile hood 2 and the discharge of the air suctioned into the mobile hood 2 to the outside of the mobile hood 2 may be performed in front of the fan 231, and the discharge of the air through the inlet I may be performed radially outside the area in which the suction of the air through the inlet I is performed.

The flow of the air discharged through the outlet O, that is, the discharge flow may form the air curtain in front of the mobile hood 2. The air curtain formed as described above may block the flow of the air located in a lateral outer area of the air curtain and the mobile hood 2, thereby preventing the air located in the lateral outer area of the air curtain from being suctioned to the mobile hood 2.

Therefore, since a condition in which the air located in a lateral inner area of the air curtain may be suctioned into the mobile hood 2 may be effectively established, it is possible to more effectively suction polluted air generated in front of the mobile hood 2.

Meanwhile, the outlet O may be formed with the discharge passage a, and the discharge passage a may form a passage connecting a discharge side of the fan 231 with the outlet O. The discharge passage a may be formed between the inner skirt portion 242 and the outer skirt portion 221 and between the inner connection portion 243 and the outer connection portion 223.

In the discharge passage a, a section formed between the inner connection portion 243 and the outer connection portion 223 corresponds to a section (hereinafter referred to as a "first section") adjacent to the fan 231, and a section formed between the inner skirt portion 242 and the outer skirt portion 221 corresponds to a section (hereinafter referred to as a "second section") adjacent to the outlet O.

According to the present embodiment, a width of the outlet O may be set to be smaller than or equal to a width of the discharge passage a. In addition, the width of the discharge passage a may be set to gradually become narrower toward the outlet O. To this end, a gap between the outer skirt portion 221 and the inner skirt portion 242 may be set to gradually become narrower forward.

When the discharge passage a is formed as described above, a moving rate of the air discharged from the fan 231 gradually increases while passing through the discharge passage a. As a result, the rate of the discharge flow discharged through the outlet O may increase, thereby effectively increasing the strength and operating distance of the air curtain formed by the discharge flow.

### [Structures of a battery and a display]

FIG. 33 is a configuration diagram schematically showing a portion of the configuration of the mobile hood according to another embodiment of the present invention.

As shown in FIGS. 27, 28, and 33, the mobile hood 2 according to the present embodiment may further include a battery 271 and a battery case 270.

The battery 271 may be electrically connected to the driver 233 to supply power to the driver 233. The battery 271 may be disposed at one side or the other side of the case 210 in the second direction, that is, at an upper or lower side of the case 210. In addition, the battery case 270 may accommodate the battery 271 therein and may be installed at the upper or lower side of the case 210.

By providing the battery 271 in the mobile hood 2, the installation place of the mobile hood 2 is not limited to a location at which power may be supplied from an external power source. That is, the mobile hood 2 according to the present embodiment may effectively treat the polluted air generated in the cooking process even at a location at which it is difficult to receive the power from the external power source.

The battery 271 may be provided in a rechargeable form, and to this end, the mobile hood 2 may further be provided with a terminal for charging the battery 271.

According to the present embodiment, the battery 271 and the battery case 270 may be installed at the lower side of the case 210. The battery 271 is provided as a heavier member than the case 210 and the components accommodated in the case 210. Preferably, the battery 271 may be provided to have a heavier weight than the sum of the weights of the case 210, the fan module 230, and the flow guide part.

Typically, since the weight per unit volume of the battery 271 is much heavier than the weight per unit volume of the case 210, the fan module 230, and the flow guide part, even when the weight or size of the battery 271 is not artificially increased, it is not difficult for the battery 271 to be formed of the heavier member than the case 210, the fan module 230, and the flow guide part.

That is, even when the battery 271 having the capacity required for normal use of the mobile hood 2 is applied to the mobile hood 2, the battery 271 may be naturally provided as the heavier member than the case 210 and the components accommodated inside the case 210.

As described above, when the heavy battery 271 is disposed at the lower side of the case 210, the risk of the mobile hood 2 falling over is reduced. That is, since the center of gravity of the mobile hood 2 is located at the lower side due to the battery 271 disposed at the lower side of the mobile hood 2, the mobile hood 2 does not easily fall down.

In addition, the mobile hood 2 according to the present embodiment may further include a display 275. The display 275 may be disposed at the front side of the battery case 270 and electrically connected to the battery 271. The display 275 may receive power from the battery 271 and display various pieces of information about the operation of the mobile hood 2.

For example, the display 275 may display an operating state of the mobile hood 2, an intensity of the air volume, a state of the battery 271, etc. In addition, when the mobile hood 2 is provided with a sensor for detecting air quality, information about the air quality may be displayed through the display 275.

Meanwhile, the mobile hood 2 according to the present embodiment may further include a controller 280. The controller 280 may receive power through the battery 271 and control operations of the driver 233, the display 275, etc.

### [Function and effect of the mobile hood]

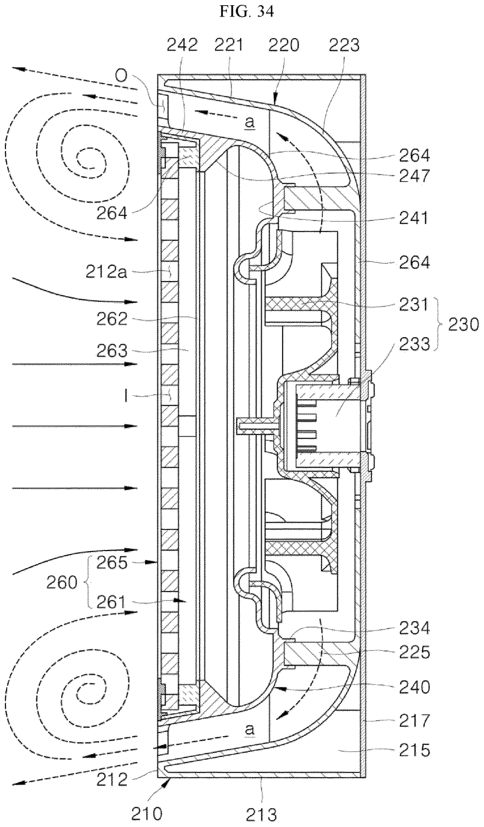

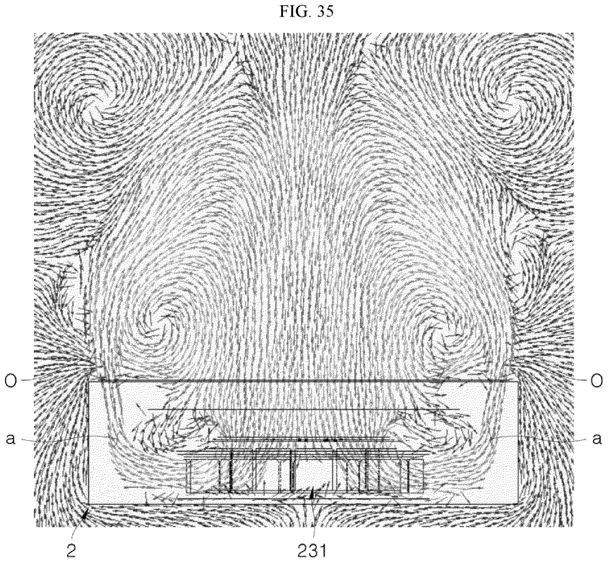

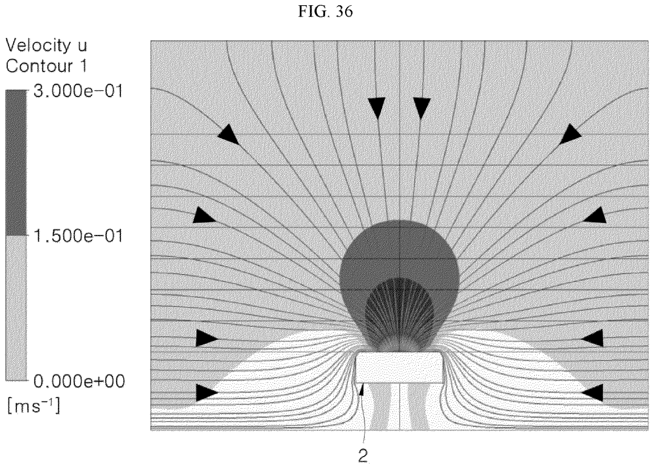

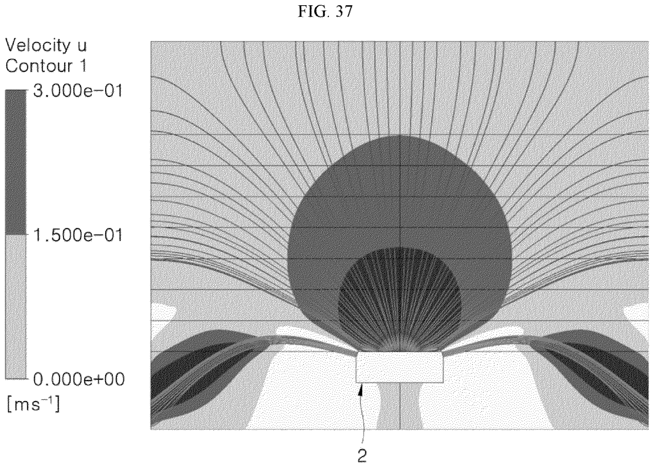

FIG. 34 is a side cross-sectional view showing an airflow inside the mobile hood shown in FIG. 29, and FIG. 35 is a side cross-sectional view showing the trend of a rate of the airflow near a range hood without air curtain function. In addition, FIG. 36 is a side cross-sectional view showing the trend of a rate of the airflow near the mobile hood in an operating state of the mobile hood shown in FIG. 29, and FIG. 37 is a side cross-sectional view showing an air volume state near the mobile hood in the operating state of the mobile hood shown in FIG. 29.

Hereinafter, the operation and effect of the mobile hood according to the present embodiment will be described with reference to FIGS. 34 to 37.

It should be noted that lines shown in FIG. 35 are lines indicating an air volume, and the closer the color of the line indicating the air volume is to blue, the lower the air volume is, and the closer the color of the line indicating the air volume is to red, the higher the air volume is.

In addition, it should be noted that lines shown in FIGS. 36 and 37 are lines indicating an air velocity, and the closer the color of the line indicating the air velocity is to blue, the lower the air velocity is, and the closer the color of the line indicating the air volume is to red, the higher the air velocity is.

Referring to FIG. 34, the mobile hood 2 according to the present embodiment may be disposed adjacent to a cooking vessel for generating polluted air in the cooking process. The mobile hood 2 may purify the polluted air generated during cooking while changing the location thereof as needed rather than being fixedly installed at any one location.

As an example, even when cooking is performed using a portable burner in a place other than a kitchen, for example, a room or a lounge, the mobile hood 2 according to the present embodiment may be disposed near its cooking location to purify the polluted air generated from the cooking vessel heated by the portable burner.

The mobile hood 2 according to the present embodiment may be installed at various locations in various forms by freely changing the location and attitude thereof. The mobile hood 2 may effectively suction the polluted air generated from the cooking vessel when the front surface thereof is disposed to face the cooking vessel.

In the conventional range hood without the air curtain function, as shown in FIG. 35, not only the suction of the polluted air generated from the cooking vessel, but also the suction of air at other locations unrelated to the cooking location are performed together.

For example, not only the air including the polluted air generated at the front side of the mobile hood is suctioned, but also the air at the side or rear side of the range hood is suctioned.

The suction power generated by the first fan module spreads and acts in all directions near the mobile hood 1, thereby making it difficult to effectively suction the polluted air generated at the front side of the range hood.

That is, as the suction power generated by the suction fan is evenly dispersed and applied both to the front side and in other directions, the strength of the suction power acting on the front side of the range hood inevitably becomes weaker accordingly.

Therefore, it is difficult for the smoke and pollutants generated from the cooking vessel to be effectively suctioned into the range hood. That is, as the strength of the suction power acting on the front side of the range hood weakens, the suction possible area of the range hood is inevitably reduced.

As shown in FIG. 34, when the fan module 230 is operated, air in the front of the mobile hood 2 flows into the mobile hood 2 through the inlet I. In this case, the air introduced through the inlet I may be purified by the filter 250 while passing through the filter 250, and the purified air may be suctioned into the fan 231.

The air suctioned into the fan 231 may be discharged from the fan 231 in the centrifugal direction. The air discharged from the fan 231 may flow into the discharge passage a formed outside the fan 231 in the radial direction. The air flowing into the discharge passage a may move toward the outlet O along the discharge passage a and may be discharged to the front side of the mobile hood 2 through the outlet O.

The air discharged as described above may form an air curtain that surrounds the suction flow at both sides in the left-right direction. The air curtain allows the suction power generated by the fan module 230 to mainly act in the area surrounded by the air curtain, thereby increasing the strength of the suction flow generated in front of the mobile hood 2.

For example, as shown in FIGS. 34, 36, and 37, the air curtain may block the flow of the air located in the lateral outer area of the air curtain and the mobile hood 2, thereby preventing the air located in the lateral outer area of the air curtain from being suctioned into the mobile hood 2.

Therefore, since the condition necessary to increase the intensity of the flow of the air formed in the area surrounded by the air curtain, that is, the suction flow may be effectively established, it is possible to effectively increase the intensity of the suction flow, thereby more effectively suctioning the polluted air.

Therefore, the mobile hood 2 according to the present embodiment can effectively contribute to suppressing the spread of pollutants in the cooking space by effectively suctioning, purifying, and then discharging the pollutants without spreading the pollutants.

In addition, some of the discharge flow forming the air curtain may be affected by the suction power acting on the front side of the mobile hood 2 by being generated by the fan module 230 and re-suctioned into the mobile hood 2. The air discharged through the outlet O is in a state of being purified already passing through the filter 250 once. When the air is re-suctioned into the mobile hood 2, the air may be re-purified by passing through the filter 250 once more.

While the mobile hood 2 is operating, the above phenomenon may occur repeatedly. Therefore, it is possible to achieve the n^{th} filtering effect in which air is filtered multiple times by the filter 250. Therefore, the mobile hood 2 according to the present embodiment can provide the more improved air purification effect.

Due to the characteristics of the mobile hood 2 provided to enable movement arrangement, the mobile hood 2 according to the present embodiment does not discharge the suctioned polluted air to the outside, filters the polluted air through the filter 250, and then re-discharges the polluted air therein.

Therefore, the mobile hood 2 according to the present embodiment needs to provide a much higher level of pollutant removal performance than a range hood in a form that suctions polluted air and then discharges the polluted air to the outside.

In addition, the mobile hood 2 according to the present embodiment does not form an upward suction flow at the top of the cooking vessel P, but forms a suction flow outside the cooking vessel P in the horizontal direction. The mobile hood 2 according to the present embodiment needs to provide a higher level of suction performance and pollutant removal performance than a range hood that forms an upward suction flow.

That is, since the mobile hood 2 according to the present embodiment forms the suction flow outside the cooking vessel P in the horizontal direction and re-discharges the suctioned polluted air therein without discharging the suctioned polluted air to the outside, the mobile hood 2 should provide a high level of suction performance and pollutant removal performance.

Considering such a point, the mobile hood 2 according to the present embodiment can improve suction performance by guiding the suction of the polluted air through the air curtain formed by the fan module and at the same time, achieve the n^{th} filtering effect in which the polluted air is repeatedly suctioned multiple times and filtered.

The mobile hood 2 according to the present embodiment can further provide the following effects.

First, the mobile hood 2 according to the present embodiment can purify the polluted air generated during cooking while changing the location as needed rather than being fixedly installed at any one location. The mobile hood has an advantage that can be highly used because the mobile hood may be used by being moved to a place desired by the user, such as a kitchen, a dining table, a room, a lounge, a living room, or an outdoor.

Second, since the mobile hood 2 according to the present embodiment can provide the more improved suction performance and pollutant removal performance by forming the air curtain near the suction flow to increase the suction efficiency for the polluted air generated from a cooking object.

Third, the mobile hood 2 according to the present embodiment can provide the more improved pollutant removal performance by achieving the n^{th} filtering effect in which the polluted air is repeatedly suctioned and filtered multiple times.

The mobile hood 2 according to the present embodiment may be disposed to be freely moved to various locations rather than the typical hood installation place, thereby more efficiently collecting the pollutants generated in the cooking process and very effectively purifying polluted air near the cooking area.

Fourth, the mobile hood 2 according to the present embodiment can very effectively increase the collection efficiency for the pollutants without increasing the suction rate of the fan by increasing the suction efficiency for the polluted air using the air curtain as described above. Therefore, the mobile hood 2 according to the present embodiment can effectively increase the collection efficiency for pollutants without significantly increasing power consumption.

Fifth, the mobile hood 2 according to the present embodiment can improve the suction performance of the mobile hood 2 without the hassle of installing an additional structure by allowing the air curtain formed by the operation of the fan module to serve as a structure such as a blocking film or an awning.

In addition, when the structure such as a blocking film or an awning is installed in the cooking space, the structure may interfere with the activity of a user who is cooking. In contrast, the mobile hood 2 according to the present embodiment can improve suction performance without interfering with the activity of the user who is cooking by allowing the air curtain formed by the operation of the fan module to serve as the structure such as a blocking film or an awning.

Sixth, the mobile hood 2 according to the present embodiment can be provided in a shape having a small thickness sufficiently installed even in the narrow cooking space by allowing the suction of the outside side through the inlet and the discharge of the air through the outlet to be performed by one fan.

Seventh, the mobile hood 2 according to the present embodiment can effectively form the air curtain without separately adding the fan for forming the air curtain by forming the air curtain using the discharge flow generated from the fan module 230 suctioning the polluted air.

The mobile hood 2 according to the present embodiment can suppress an increase in the manufacturing cost and the manufacturing process and provide more improved performance.

Eighth, the mobile hood 2 according to the present embodiment can stably maintain the combustion of the heating device that generates a flame, for example, the gas cook-top, and effectively remove the pollutants generated by the heat generated by the corresponding heating device.

In the case of the range hood that uses a swirler or a vortex fan, there is a problem such as the fact that the vortex generated from the swirler or the vortex fan reach the flame of the gas cook-top, thereby causing the flame to shake and affecting the combustion of the gas cook-top.

In contrast, in the mobile hood 2 according to the present embodiment, like the discharge flow forming the air curtain that faces the side and front side without facing the front side toward the heating device, any discharge flow generated from the mobile hood 2 does not face the heating device.

Therefore, the mobile hood 2 according to the present embodiment can effectively improve the suction performance of the mobile hood 2 without affecting the combustion of the heating device that generates a flame, such as the gas cook-top.

Ninth, the mobile hood 2 according to the present embodiment can effectively suppress the polluted air from facing the user by forming the air curtain using the air purified by the filter 250 inside the mobile hood 2.

The mobile hood 2 according to the present embodiment can provide the effect of significantly reducing the discomfort felt by the user when the airflow forming the air curtain reaches the user.

Moreover, the mobile hood 2 according to the present embodiment can provide the more improved air purification effect by implementing the n^{th} filtering effect in which the air is filtered multiple times by the filter 250, thereby more effectively improving the air quality of the air curtain.

### [Operational control of the mobile hood]

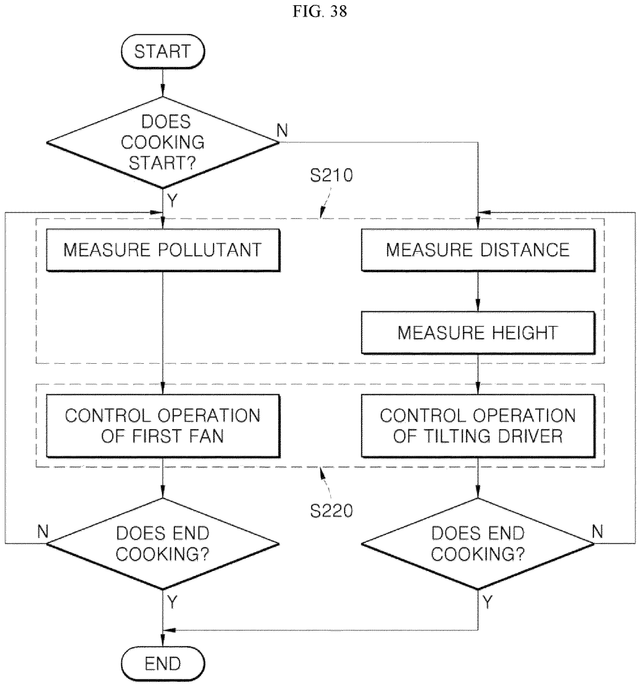

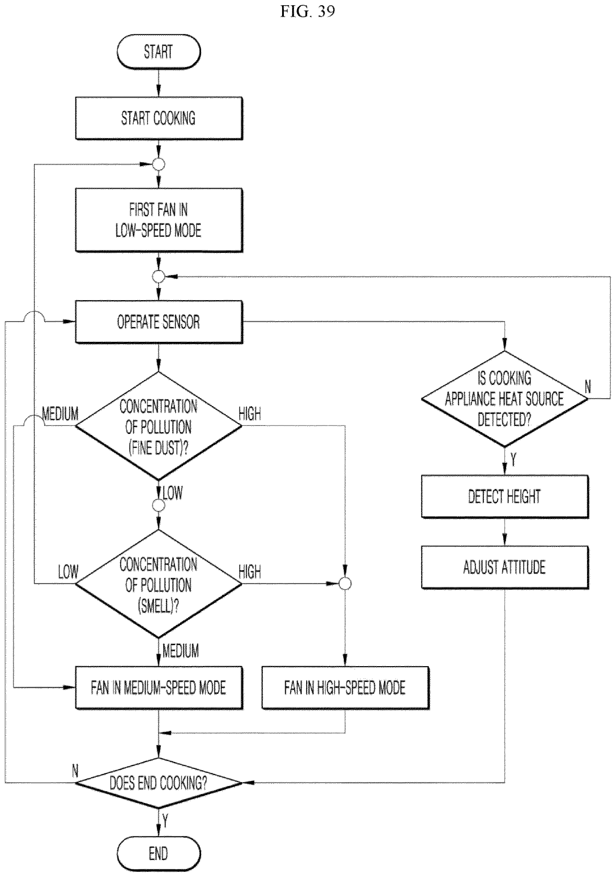

FIG. 38 is a flowchart schematically showing a method for controlling the mobile hood according to another embodiment of the present invention, and FIG. 39 is a flowchart specifically showing a process of controlling the mobile hood according to another embodiment of the present invention. In addition, FIGS. 40 to 42 are side views showing an attitude change state of the mobile hood according to another embodiment of the present invention.

Referring to FIGS. 33 and 40, the mobile hood 2 according to another embodiment of the present invention may further include a support 290 and a fourth controller 295.

The support 290 may be provided to support the case 210 (see FIG. 2) having an adjustable attitude. The case 210 may be rotatably installed on the support 290.

For example, the protruding shaft 216 (see FIG. 2) protruding from both side surfaces of the case 210 may be coupled to the support 290 to rotate about the axis in the lateral direction. Therefore, the case 210 and the mobile hood 2 may be rotatably supported by the support 290, and thus the mobile hood 2 may be tiltably installed on the support 290.

The fourth driver 295 may be provided to rotate the case 210 so that the attitude of the case 210 is adjusted. The fourth driver 295 may generate a rotational force about the axis in the lateral direction. As an example, the fourth driver 295 may be provided in a form including an electric motor having a shaft that rotates about the axis in the lateral direction.

In addition, the mobile hood 2 according to the present embodiment may further include a sensor module 20. The sensor module 20 is provided to detect at least any one of a distance to the cooking object, for example, the cooking vessel P, the height of the cooking object, and the concentration of pollutant. The sensor module 20 may include at least any one of the distance sensor 11, the dust sensor 12, and the gas sensor 13. In the present embodiment, it is shown that the sensor module 20 includes all of the distance sensor 11, the dust sensor 12, and the gas sensor 13.

In the present embodiment, it is shown that a plurality of distance sensors 11 are used to measure the height of the cooking object. Therefore, the sensor module 20 may include the plurality of distance sensors 11.

According to the present embodiment, the plurality of distance sensors 11 may be arranged in the vertical direction. Each distance sensor 11 may be installed on the support 290, and the distance sensors 11 may be disposed to be spaced at a predetermined distance from each other in the vertical direction.

The height of the cooking object may be measured by using the plurality of distance sensors 11 disposed as described above. As an example, the height of the cooking object may be measured by identifying which a distance sensor 11 is disposed at the highest location among the distance sensors 11 detecting that the cooking object is within a specified distance.

For example, when five of the distance sensors 11 among the distance sensors 11 arranged at a 10 cm distance from the bottom surface of the support 290 detects that the cooking object is the specified distance, for example, 10 cm, the height of the cooking object may be measured to be 50 cm.

Meanwhile, the sensor module 20 may measure the distance between the mobile hood 2 and the cooking object using the distance sensor 11 and measure the concentration of pollutant using the dust sensor 12 and gas sensor 13.

Since methods of measuring the distance using the distance sensor 11 and measuring the concentration of pollutant using the dust sensor 12 and the gas sensor 13 are the same as or similar to that exemplified in the above-described embodiment, detailed description thereof will be omitted here.

Hereinafter, a method for controlling the mobile hood according to another embodiment of the present invention will be described with reference to FIGS. 33 and 38 to 42.

As shown in FIGS. 33 and 38 to 40, when cooking starts and the operation of the mobile hood also starts, the controller 280 controls the operation of the driver 233 so that the fan may rotate at a predetermined rate.

The controller 280 may adjust the rotational speed of the fan by controlling the operation of the driver 233. In the present embodiment, it is shown that the controller 280 may change the operation of the fan into three modes.

Therefore, the controller 280 may change the operation of the fan into a high-speed mode in which the rotational speed of the fan is the fastest, a low-speed mode in which the rotational speed of the fan is slower than the high-speed mode, and a medium speed mode in which the rotational speed of the fan is a speed between the high-speed mode and the low-speed mode.

In the present embodiment, it is shown that the fan is operated in the low-speed mode when the operation of the mobile hood starts. That is, the controller 280 may control the operation of the driver 233 so that an initial operation of the fan starts in the low-speed mode when the mobile hood is activated.

When the operation of the mobile hood starts as described above, at least any one of the distance measurement to the cooking object and the concentration measurement of pollutants may be performed by the sensor module 20 (S210).

The sensor module 20 may measure the concentration of the pollutants using at least any one of the dust sensor 12 and the gas sensor 13. Since the method for measuring the concentration of pollutant performed by the sensor module 20 is the same as or similar to the method of measuring the concentration of pollutant performed by the sensor module 10 (see FIG. 18) of the above-described embodiment, detailed description thereof will be provided here.

In addition, the sensor module 20 may measure the distance between the mobile hood 2 and the cooking object using the distance sensor 11. In addition, the sensor module 20 may measure the height of the cooking object using a plurality of distance sensors 11 arranged in the vertical direction.

Since the methods for measuring the distance and height using the distance sensor 11 have been described above, descriptions thereof will be omitted here.

The controller 280 may control an operation of at least any one of the fan and the fourth driver 233 based on the result of measurement by the sensor module 20 (S220).

As an example, the controller 280 may control the operation of the fan based on the results of measurement by the dust sensor 12 and the gas sensor 13.

Therefore, when the concentration of pollutant is at a low level, the controller 280 may control the operation of the driver 233 so that the fan is operated in the low-speed mode. For example, when the concentration of fine dust measured by the dust sensor 12 and the concentration of gas measured by the gas sensor 13 are all at a low level, the fan may be operated in the low-speed mode.

In addition, when the concentration of pollutant is at a low level, the operation of the driver 233 may be controlled so that the fan is operated in the medium-speed mode. For example, the concentration of fine dust measured by the dust sensor 12 is at a medium level, or the concentration of fine dust measured by the dust sensor 12 is at a low level and the concentration of gas measured by the gas sensor 13 is at a medium level, the fan may be operated in the medium-speed mode.

In addition, when the concentration of pollutant is at a high level, the operation of the driver 233 may be controlled so that the fan is operated in the high-speed mode. For example, the concentration of fine dust measured by the dust sensor 12 is at a high level, or the concentration of fine dust measured by the dust sensor 12 is at a low level and the concentration of gas measured by the gas sensor 13 is at a high level, the fan may be operated in the high-speed mode.

Therefore, in the mobile hood according to the present embodiment, the flow rate and air volume of the suction flow guided by the mobile hood may be automatically decreased by reducing the rotational speed of the fan when the concentration of pollutant is low, and the flow rate and air volume of the suction flow guided by the mobile hood may be automatically increased when the concentration of pollutant is high.

That is, the mobile hood according to the present embodiment can quickly remove the pollutant by automatically increasing the flow rate and air volume of the suction flow when the concentration of pollutant is high and reduce unnecessary energy consumption by decreasing the rotational speed of the first fan when the concentration of pollutant is high.

Meanwhile, in the present embodiment, it is shown that operational control of the fan is performed based on the results of measurement by the dust sensor 12 and the gas sensor 13, and operational control of the fourth driver 295 is performed based on the result of measurement by the distance sensor 11.

As an example, the controller 280 may control the operation of the fourth controller 295 based on the result of measurement by the distance sensor 11.

Therefore, the controller 280 may derive the attitude of the case 210, that is, the attitude of the mobile hood 2 based on the distance measurement result and the height measurement result and control the operation of the fourth driver 295 to take the derived attitude of the mobile hood 2.

Therefore, when the distance between the mobile hood 2 and the cooking object measured by the sensor module 20 is within a set range, the controller 280 may derive the attitude of the mobile hood 2 according to the measured height of the cooking object, for example, the height of the cooking vessel P and adjust the attitude of the mobile hood 2 to the derived attitude.

For example, as shown in FIGS. 33 and 40, when the height of the cooking vessel P measured by the sensor module 20 is lower than a preset reference height, the controller 280 may control the operation of the fourth driver 295 so that the mobile hood 2 is tilted downward.

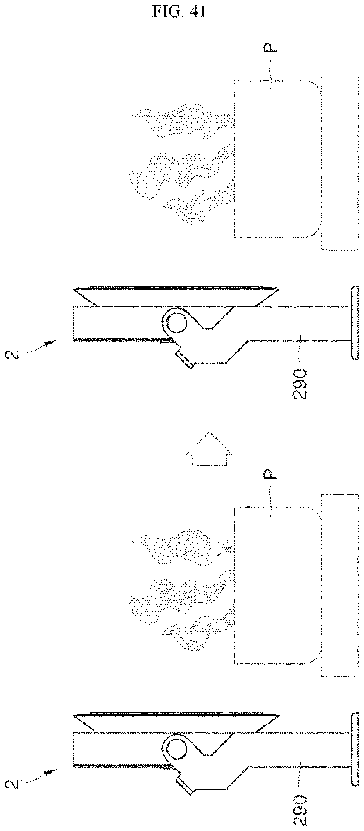

As another example, as shown in FIGS. 33 and 41, when the height of the cooking vessel P measured by the sensor module 20 is within a preset reference height range, the controller 280 may control the operation of the fourth driver 295 so that the mobile hood 2 maintains the attitude facing forward without being tilted to any one of upper and lower sides.

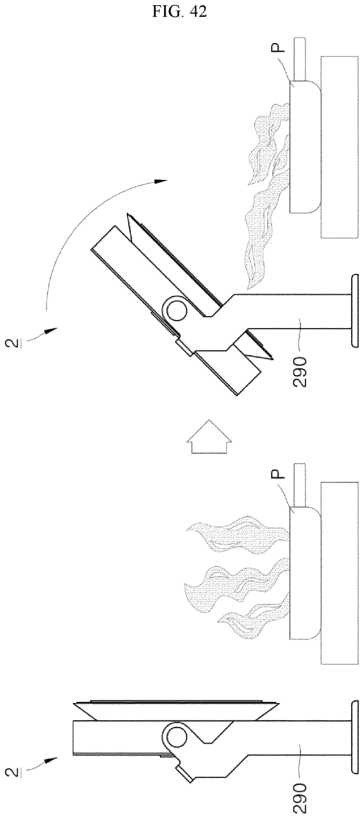

As still another example, as shown in FIGS. 33 and 42, when the height of the cooking vessel P measured by the sensor module 20 is higher than the preset reference height, the controller 280 may control the operation of the fourth driver 295 so that the mobile hood 2 is tilted upward.

That is, the controller 280 may adjust the attitude of the mobile hood 2 in a form that tilts the mobile hood 2 downward when the height of the cooking object is low and tilts the mobile hood 2 upward when the height of the cooking object is high.

Therefore, the mobile hood 2 according to the present embodiment can effectively suction pollutants in a state in which an acting direction of the suction power matches a direction in which a pollutant generating source is located.

The mobile hood 2 according to the present embodiment can improve the user's convenience and at the same time, effectively increase the collection efficiency for the pollutants by automatically adjusting the attitude to an attitude suitable for the installation height of the mobile hood 2 or the height of the generation of the pollutant to suction the pollutant.

In addition, the mobile hood 2 according to the present embodiment may automatically adjust the strength of the suction power and the angle and strength of the air curtain according to the installation distance of the mobile hood 2 or the height of the generation of the pollutant, and thus implement the n^{th} filtering effect in which the air to be purified is filtered multiple times by the filter, thereby providing the more improved air purification effect and thus more effectively improving the air quality of the air curtain.

The present invention has been described with reference to the embodiments shown in the accompanying drawings, but it is merely illustrative, and those skilled in the art to which the relevant technology pertains will understand that various modifications and other equivalent embodiments are possible therefrom. Therefore, the true technical scope of the present invention should be determined by the scope of the appended claims.

### <Description of reference numerals>

1,2: mobile hoods
10: sensor module
15: controller
100: main body
110, 210: cases
110a: first case
110b: second case
111, 211: first surface
113, 213: second surface
114: outlet
115, 215: third surface
116: discharge port
117: scroll
118: through hole
120: cover
122: inlet
125: partition wall
130: grill
140: filter
150: first fan module
151: first fan
153: first driver
160: second fan module
161: second fan
163: second driver
170: third driver
175: rotational member
180: first Link
185: second Link
190: louver
211a: installation hole
212: cover surface
212a: second through hole
216: protruding shaft
217: bracket plate
219: support
219a: fitting hole
220: shroud
221: outer skirt portion
223: outer connection portion
225: coupling protrusion
230: fan module
231: fan
233: driver
240: orifice shell
241: ring-shaped portion
241a: first through hole
242: inner skirt portion
243: inner connection portion
244: coupling boss
245: blade
247: support wing
250: filter
260: fixing cover
261: first fixing cover portion
262: support surface
263: extension surface
264: support protrusion
265: second fixing cover portion
270: battery case
271: battery
275: display
280: controller
290: support
295: fourth driver
a: discharge passage
I: inlet
O: outlet

## Claims

1. A method for controlling a mobile hood including a main body provided with an outlet and a discharge port, a fan configured to suction outside air, and a sensor module configured to detect at least any one of a distance to a cooking object and a concentration of pollutant, the method comprising:
a measuring operation of performing at least any one of distance measurement to the cooking object and concentration measurement of the pollutant; and
an operational control operation of controlling an operation of an operation of the fan based on the result of measurement in the measuring operation.

2. The method of claim 1, wherein the mobile hood further includes the main body provided with the inlet and the discharge port, a first fan configured to suction the outside air and discharge the outside air to the outlet, a second fan configured to suction the air outside the first fan and discharge the air to the discharge port, and a louver provided to move between a closed location at which the discharge port is closed and an unfolded location at which the discharge port is opened, and the operational control operation includes controlling an operation of at least any one of the first fan, the second fan, and the louver based on the result of measurement in the measuring operation.

3. The method of claim 2, wherein the measuring operation includes measuring the distance to the cooking object, and
the operational control operation includes setting a location of the louver based on the result of measurement in the measuring operation.

4. The method of claim 3, wherein the first fan suctions the outside air in a first direction and discharges the suctioned air in a second direction orthogonal to the first direction through the outlet,
a pair of the second fans are disposed in a third direction with the first fan interposed therebetween,
the pair of the second fans discharge the outside air suctioned in the first direction in a direction between the first direction and the third direction through the discharge port,
the louver forms a surface parallel to the third direction at the unfolded location, and forms a surface parallel to the first direction at the closed location, and
the operational control operation includes setting a location of the louver to a location closer to the closed location than the unfolded location when the distance measured in the measuring operation is greater than or equal to a reference distance and setting the location of the louver to a location closer to the closed location than the closed location when the distance measured in the measuring operation is smaller than the reference distance.

5. The method of claim 4, wherein the operational control operation includes setting the rotational speed of the second fan based on the result of measurement in the measuring operation.

6. The method of claim 2, wherein the measuring operation includes a distance measurement operation of measuring the distance to the cooking object, and a pollutant measuring operation of measuring the concentration of the pollutant, and
the operational control operation includes setting the rotational speed of the first fan based on the result of measurement in the pollutant measuring operation, and setting the rotational speed of the second fan based on the result of measurement in the distance measuring operation.

7. The method of claim 1, wherein the mobile hood further includes a case having an accommodation space formed therein and having an inlet provided at one side in the first direction, a fan accommodated in the accommodation space and configured to suction the outside air through the inlet, a support configured to support the case having an adjustable attitude, and a driver configured to rotate the case so that the attitude of the case is adjusted,
the sensor module detects at least any one of the distance to the cooking object, a height of the cooking object, and the concentration of the pollutant,
the measuring operation includes performing at least any one of the distance measurement to the cooking object, the height measurement of the cooking object, and the concentration measurement of the pollutant, and
the operational control operation includes controlling an operation of at least any one of the fan and the driver based on the result of measurement in the measuring operation.

8. The method of claim 7, wherein the measuring operation includes measuring the height of the cooking object, and
the operational control operation includes controlling an operation of the driver to take the derived attitude of the case based on the result of measurement in the measuring operation.

9. The method of claim 7, wherein the measuring operation includes a distance measuring operation of measuring the distance to the cooking object, and a height measuring operation of measuring the height of the cooking object,
wherein the method for controlling a mobile hood further comprising an attitude deriving operation of deriving the attitude of the case based on the result of measurement in the distance measuring operation and the result of measurement in the height measuring operation,
wherein the operational control operation includes controlling an operation of the driver to take the attitude of the case derived in the attitude deriving operation.

10. The method of claim 7, wherein the measuring operation includes measuring the distance to the cooking object, and
the operational control operation includes setting the rotational speed of the fan based on the result of measurement in the measuring operation.
